(19) Europäisches Patentamt / European Patent Office / Office européen des brevets

(11) **EP 3 947 312 B1**

(12) **EUROPEAN PATENT SPECIFICATION**

(45) Date of publication and mention
of the grant of the patent:
**17.06.2026 Bulletin 2026/25**

(21) Application number: **20784771.6**

(22) Date of filing: **03.04.2020**

(51) International Patent Classification (IPC):
*C04B 14/22* (2006.01)      *C04B 26/14* (2006.01)
*C04B 28/18* (2006.01)      *B09B 3/21* (2022.01)
*B29C 39/42* (2006.01)      *E04C 2/02* (2006.01)
*E04C 2/16* (2006.01)      *C08K 3/40* (2006.01)

(52) Cooperative Patent Classification (CPC):
(C-Sets available)
**E04C 2/02; B09B 3/21; B29C 39/42; C04B 14/22;
C04B 26/14; C04B 26/18; C08K 3/40; C08L 99/00;
E04C 2/16;** B29K 2031/00; B29K 2063/00;
B29K 2067/00; B29K 2105/16; C04B 2111/00612;
C04B 2111/542;                    (Cont.)

(86) International application number:
**PCT/AU2020/050339**

(87) International publication number:
**WO 2020/198809 (08.10.2020 Gazette 2020/41)**

(54) **COMPOSITE PRODUCTS AND THE MANUFACTURE THEREOF**

VERBUNDPRODUKTE UND DEREN HERSTELLUNG

PRODUITS COMPOSITES ET LEUR FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.04.2019 AU 2019901140**

(43) Date of publication of application:
**09.02.2022 Bulletin 2022/06**

(73) Proprietor: **NewSouth Innovations Pty Limited
Sydney, New South Wales 2052 (AU)**

(72) Inventors:
• **HERIYANTO, Heriyanto
Sydney, New South Wales 2052 (AU)**
• **GHOSE, Anirban
Sydney, New South Wales 2052 (AU)**
• **SAHAJWALLA, Veena
Sydney, New South Wales 2052 (AU)**

(74) Representative: **M. Zardi & Co S.A.
Via G. B. Pioda, 6
6900 Lugano (CH)**

(56) References cited:
WO-A1-2013/110128      WO-A1-2015/044894
CN-A- 108 314 400      IT-A1- PO20 100 008
JP-A- 2003 171 158      JP-A- 2018 083 393
JP-A- H09 279 758      US-A- 5 375 777
US-A- 5 558 710      US-A1- 2006 270 758
US-A1- 2014 023 788

• ARULRAJAH ARUL ET AL: "Recycled glass as a
supplementary filler material in spent coffee
grounds geopolymers", CONSTRUCTION AND
BUILDING MATERIALS, ELSEVIER,
NETHERLANDS, vol. 151, 20 June 2017
(2017-06-20), pages 18 - 27, XP085146888, ISSN:
0950-0618, DOI: 10.1016/
J.CONBUILDMAT.2017.06.050

(52) Cooperative Patent Classification (CPC): (Cont.)
Y02W 30/91

C-Sets
**C04B 14/22, C04B 20/1051;**
**C04B 26/14, C04B 14/22, C04B 16/06, C04B 18/24,**
**C04B 18/241, C04B 24/281, C04B 40/0028,**
**C04B 40/0272;**

**C04B 26/18, C04B 14/22, C04B 16/06, C04B 18/24,**
**C04B 18/241, C04B 24/281, C04B 40/0028,**
**C04B 40/0259, C04B 40/0263;**
**C04B 26/18, C04B 14/22, C04B 16/06, C04B 18/24,**
**C04B 18/241, C04B 24/281, C04B 40/0028,**
**C04B 40/0272;**
**C08K 3/40, C08L 63/00**

## Description

### Field of the invention

The present invention relates generally to composite products, in particular glass-based composite products, and the manufacture thereof.

Background of the invention

Any discussion of the prior art throughout this specification should in no way be considered as an admission that such prior art is widely known or forms part of the common general knowledge in the field.

The amount of waste produced by the global population continues to increase at an alarming rate. In 2014/2015 Australians alone produced 64 million tonnes of waste. Glass waste is also on the increase in Australia with about 150,000 tonnes a year finding its way into landfill.

The present inventors have developed a method for preparing glass-based composite products that allow waste glass, as well as other common waste products, to be converted into useful products.

CN108314 400, ITPO20100008, WO2015/044894, JP2018083393, US5375777, WO2013/110128 AND ARULRAJAH ARUL ET AL: "Recycled glass as supplementary filler material in spent coffee grounds geopolymers, XP085146888 are examples of composites products and manufacture thereof.

### Summary of the invention

The present invention provides a composite product comprising glass, a polymer binder and at least one filler selected from: textile and coffee grounds, along with the features of claim 1.

The binder may be present in an amount between about 5% and about 45% by weight, or in an amount between about 15% and about 40% by weight.

The glass may be present in an amount between about 50% and about 75% by weight.

The at least one filler may be present in an amount between about 1 % and about 30% by weight, or in an amount between about 2.5% and about 15 % by weight.

The glass may have a particle size less than about 5 mm.

The glass may have a particle size between about 1 micron and about 5 mm.

The glass may have a particle size less than about 300 microns, or less than about 200 microns, or less than about 150 microns.

The glass may have a particle size between about 1 micron and about 100 microns, or a particle size between about 5 microns and about 70 microns.

The glass may be in the form of a powder.

The glass may be waste glass.

The polymer may be a thermoset polymer.

The thermoset polymer may be an epoxy resin, polyester resin or vinyl ester resin. In one embodiment the thermoset polymer is a polyester resin.

In an embodiment not part of the invention, the at least one filler may be paper cups, such as single-use paper cups, for instance single-use paper coffee cups.

The textile may be clothing, linen, bedding, blankets or curtains.

The textile may be a synthetic textile.

The at least one filler may be coffee grounds.

The at least one filler may be a textile.

The composites may further comprise a coupling agent.

The coupling agent may be a silane.

The composite may further comprise a pigment.

The composite may be in the form of a panel or a tile.

The composite may comprise greater than about 50%, or greater than about 60%, or greater than about 70% waste material by weight.

The composites may further comprise a coating.

The coating may be an epoxy coating or a polyurethane coating.

The composites may be prepared by hot pressing or casting.

A method for preparing a composite product according to the present invention comprises:

(i) forming a mixture comprising glass, a binder and at least one filler selected from: textile, and coffee grounds; and

(ii) applying heat and pressure to the mixture to form the composite product, and the further steps of claim 13.

The binder may be present in the mixture in an amount between about 5% and about 45%, or in an amount between about 15% and about 40% by weight.

The glass may be present in the mixture in an amount between about 50% and about 75% by weight.

The at least one filler may be present in the mixture in an amount between about 1 % and about 30% by weight, or in an amount between about 2.5% and about 15% by weight.

The glass, binder and at least one filler may be as defined above in the first aspect.

The glass may be dried prior to forming the mixture.

The glass may be dried at a temperature of at least about 400 °C prior to forming the mixture.

The mixture may further comprise a catalyst.

The catalyst may be present in the mixture in an amount between about 0.1 % and about 10% by weight, or in an amount between about 0.5% and about 5% by weight of the binder.

The mixture may further comprise a pigment.

The mixture may further comprise an inhibitor.

The inhibitor may be present in the mixture in an amount between about 0.01 % and about 2% by weight, or in an amount between about 0.05% and about 0.5% by weight of the binder.

The mixture may further comprise a coupling agent.

The glass may be pre-treated with a coupling agent.

The coupling agent may be a silane.

The textile may be in the form of aggregates or fibres in the mixture.

Prior to forming the mixture the coffee grounds may be dried.

Prior to forming the mixture the coffee grounds may be screened through 1 mm mesh.

Step (i) may be performed as follows:

- combining the glass and the binder and mixing, followed by addition of the at least one filler so as to provide the mixture.

Step (i) may be performed as follows:

- forming a first mixture comprising the glass and the binder, and mixing the first mixture;

- combining the catalyst with the first mixture to form a second mixture, and mixing the second mixture;

- combining the at least one filler with the second mixture, and mixing so as to provide the mixture.

The glass may be pre-treated with a coupling agent.

The coupling agent may be a silane.

The first mixture may further comprise an inhibitor.

The first mixture may further comprise a pigment.

The first mixture and the second mixture may be mixed for between about 5 minutes and about 1 hour, or between about 15 minutes and about 45 minutes, or about 30 minutes.

The at least one filler and the second mixture may be mixed for between about 5 minutes and about 1 hour, or between about 15 minutes and about 45 minutes, or about 30 minutes.

Step (ii) may be performed by loading the mixture into a die and pressing in a hydraulic press.

A method for preparing a composite product according to the present invention includes:

(i) forming a mixture comprising glass, a binder and at least one filler selected from: textile, and coffee grounds;

(ii) loading the mixture into a mould; and

(iii) applying a vacuum to the mixture to provide the composite, and the further steps as claimed in claim 14.

The method may further comprise:

(iv) separating the composite from the mould.

The vacuum may be at a pressure between about 10 mmHg and about 50 mmHg, or about 30 mmHg.

The vacuum may be applied for about 12 to 24 hours.

The glass, binder and at least one filler may be as defined above in the first aspect.

The glass, binder and at least one filler may be present in the mixture in the amounts stated above in connection with the second aspect.

The glass may be dried prior to forming the mixture.

The glass may be dried at a temperature of at least 400 °C prior to forming the mixture.

The mixture may further comprise a catalyst.

The catalyst may be present in the mixture in an amount between about 0.1 % and about 10% by weight, or in an amount between about 0.5% and about 5% by weight of the binder.

The mixture may further comprise a pigment.

The mixture may further comprise an inhibitor.

The inhibitor may be present in the mixture in an amount between about 0.01 % and about 2% by weight, or in an amount between about 0.05% and about 4% by weight.

The mixture may further comprise a coupling agent.

The glass may be pre-treated with a coupling agent.

The coupling agent may be a silane.

The textile may be in the form of aggregates or fibres in the mixture.

Prior to forming the mixture the coffee grounds may be dried.

Prior to forming the mixture the coffee grounds may be screened through 1 mm mesh.

Step (i) may be performed as follows:

- forming a first mixture comprising the inhibitor and the binder, and mixing the first mixture;

- combining the glass and the catalyst with the first mixture to form a second mixture, and mixing the second mixture;

- combining the at least one filler with the second mixture, and mixing so as to provide the mixture.

The glass may be pre-treated with a coupling agent.

The coupling agent may be a silane.

The first mixture may be allowed to stand for at least 2 hours following mixing.

The at least one filler and the second mixture may be mixed for between about 30 minutes and about 90 minutes, or about 60 minutes.

In a fourth aspect the present invention provides a composite product when obtained by the method of the second or third aspects.

### Definitions

Throughout this specification, unless the context requires otherwise, the word "comprise", or variations such as "comprises" or "comprising", will be understood to imply the inclusion of a stated element, integer or step, or group of elements, integers or steps, but not the exclusion of any other element, integer or step, or group of elements, integers or steps. Thus, in the context of this specification, the term "comprising" means "including principally, but not necessarily solely".

In the context of this specification the terms "a" and "an" are used herein to refer to one or to more than one (i.e to at least one) of the grammatical object of the article. By way of example, "an element" means one element or more than one element.

The term "about" is understood to refer to a range of numbers that a person of skill in the art would consider equivalent to the recited value in the context of achieving the same function or result.

### Brief Description of Drawings

Embodiments of the invention will now be described by way of example only with reference to the accompanying drawings, in which:

Figure 1: A method for preparation of a composite product in accordance with one embodiment of the invention.

Figure 2: Examples of composite products prepared in accordance with embodiments of the invention. (a) a composite panel manufactured from waste glass powder and fine paper cups (from coffee cups). (b) a composite panel manufactured from waste glass powder and coffee grounds. (c) a composite panel manufactured from waste glass powder and paper cup aggregate (from coffee cups). (d) a composite panel manufactured from waste glass powder and textile aggregate.

Figure 3: Flexural strength of hot press panels.

Figure 4: Compression strength of hot press panels.

Figure 5: Density of hot press panels.

Figure 6: Penetration depth of hot press panels.

Figure 7: Wear profile of hot press panels.

Figure 8: Stain profiles of hot press panels. (a) is sample 1, (b) is sample 2 and (c) is sample 3.

Figure 9: Casting method and apparatus.

Figure 10: Flexural strength of textile-containing panels.

Figure 11: Compressive strength of textile-containing panels.

Figure 12: Density of textile-containing panels.

Figure 13: Water absorption of textile-containing panels.

Figure 14: Penetration depth of polyurethane coating (Shore D 80).

Figure 15: Wear profile of a coated composite panel and various stones (A-D); (F) correlation of wear resistance with toughness.

Figure 16: Stain test on a composite panel coated with a coating.

Figure 17: Flexural strength of glass/polyester resin panels with coffee cups and coffee grounds.

Figure 18: Compressive strength of glass/polyester resin panels with coffee cups and coffee grounds.

Figure 19: Density of glass/polyester resin panels with coffee cups and coffee grounds.

Figure 20: Water absorption of glass/polyester resin panels with coffee cups and coffee grounds.

Figure 21: XRD analysis of powder (a) from glass; (b) from a crushed polyester/glass/textile panel (fine powder); (c) collected from cutting residue of a polyester/glass/textile panel.

## Detailed description

The present invention broadly relates to composite products comprising glass, a polymer binder and at least one filler selected from: textile and coffee grounds.

In preparing the composite products, the inventors have found that it is possible to successfully encapsulate textiles, paper cups and coffee grounds in the binder. The textiles also provide the product with a distinctive aesthetic appearance. It was also surprisingly found that products comprising textile and products comprising paper cups are self-extinguishing. The products may also be prepared at low cost as they are typically comprised of at least 50% to 80% by weight waste. In addition, the products are more lightweight, having a density of about 0.3 to 0.7 $g/cm^3$ lower than general ceramic tiles, or natural marble and granite stones. This allows for cheaper and easier transportation. Better product stability is also observed with minimal shrinkage and warpage when compared to products made from glass and binder alone. Furthermore, products including textiles may possess better acoustic properties than general ceramic tiles by reducing the transmission of sound vibration and excessive echo.

The binder may be present in an amount between about 5% and about 45% by weight, or in an amount between about 10% and about 50% by weight, or in an amount between about 5% and about 40% by weight, or in an amount between about 5% and about 35% by weight, or in an amount between about 5% and about 30% by weight, or in an amount between about 5% and about 25% by weight, or in an amount between about 10% and about 25% by weight, or in an amount between about 15% and about 20% by weight, or in an amount between about 15% and about 45% by weight, or in an amount between about 15% and about 40% by weight, or in an amount between about 20% and about 35% by weight, or in an amount between about 20% and about 40% by weight.

The glass is present in an amount between about 50% and about 90% by weight, or in an amount between about 50% and about 85% by weight, or in an amount between about 55% and about 85% by weight, or in an amount between about 60% and about 80% by weight, or in an amount between about 55% and about 85% by weight, or in an amount between about 55% and about 75% by weight, or in an amount between about 60% and about 75% by weight.

The at least one filler may be present in an amount between about 1% and about 30% by weight, or in an amount between about 1% and about 25% by weight, or in an amount between about 5% and about 30% by weight, or in an amount between about 5% and about 25% by weight, or in an amount between about 10% and about 25% by weight, or in an amount between about 2.5% and about 15% by weight, or in an amount between about 5% and about 10% by weight, or in an amount between about 5% and about 15% by weight.

The binder is a polymer. Suitable polymers include acrylonitrile butadiene styrene, polylactic acid, styrene acrylonitrile, polypropylene, polyethylene, high density polyethylene, low density polyethylene, linear low density polyethylene, ultra-high molecular weight polyethylene, polyvinyl chloride, polyethylene terephthalate, nylon, polystyrene, high impact polystyrene, polyoxymethylene (acetal), poly(methyl methacrylate), polyester or polycarbonate.

In some embodiments, the polymer is a thermoset polymer. A thermosetting polymer, resin, or plastic, also referred to as "a thermoset", is a polymer that is irreversibly hardened by curing from a soft, solid or viscous liquid prepolymer or resin. Curing may be induced by heat or radiation, promoted by high pressure, or by mixing with a catalyst. Curing results in extensive cross-linking between polymer chains to produce an infusible and insoluble polymer network. Examples of thermoset polymers include, but are not limited to, polyester resin, polyurethanes, polyurea/polyurethane, vulcanized rubber, bakelite, duroplast, urea-formaldehyde, melamine resin, diallyl phthalate, epoxy resin, benzoxazines, polyimides, bismaleinides, cyanate esters, furan resins, silicone resins, thiolyte and vinyl ester resins. In some embodiments the thermoset polymer may be, or obtained from, an epoxy resin, polyester resin or vinyl ester resin. In other embodiments, the thermoset polymer may be, or obtained from, an unsaturated polyester resin.

Depending on the type of thermoset polymer, a catalyst may also be used in the manufacture of the composites. The catalyst is used to promote cross-linking of the polymer which leads to hardening, otherwise known as "curing" of the polymer. Appropriate hardeners/catalysts will be known to those skilled in the art and include radical initiators, such as for example organic peroxides. Nonlimiting examples of organic peroxides include benzoyl peroxide, 2-butanone peroxide, methyl ethyl ketone peroxide (MEKP) and t-butylperoxybenzoate (TPB).

When preparing the composites, the catalyst may be added to the mixture in an amount between about 0.1% and about 10% by weight, or in an amount between about 0.5% and about 5% by weight, or in an amount between about 0.5% and about 4% by weight, or in an amount between about 0.5% and about 3% by weight, based on the weight of the binder to be included in the composite.

In some embodiments, an inhibitor is used in the manufacture of the composites. Inhibitors are antioxidant molecules that act to scavenge free radicals thereby preventing the premature, spontaneous initiation and propagation of free-radical polymerisation, and hence curing of the thermoset polymer. The inhibitors can therefore be used to control the curing rate of the polymers. Suitable inhibitors will be known to those skilled in the art, and include butylated hydroxytoluene (BHT) and monomethyl ether hydroquinone (MEHQ).

When preparing the composites, the inhibitor may be added to the mixture in an amount between about 0.01% and about 2% by weight, or in an amount between about 0.05% and about 1% by weight, or in an amount between about 0.05% and about 0.5% by weight, or in an amount between about 0.1% and about 0.5% based on the weight of the binder to be included in the composite.

Glass suitable for use in the composite products may be obtained from any source. Preferably the glass is waste glass, such as for example discarded glass containers/bottles. Other sources of waste glass include glass obtained from the building and automotive industries. In some embodiments the waste glass is mixed waste glass, i.e., waste glass obtained from multiple sources that is combined. Preferably, the glass is cleaned prior to use. In some embodiments, the glass is provided in the form of a powder or beads. In other embodiments the glass is provided in the form of an aggregate. Preferably, the waste glass is dried prior to use. For example, the waste glass may be dried at a temperature of at least about 100 °C, or at least about 200 °C, or at least about 300 °C, or at least about 400°C. Drying may be performed for between about 1 hour and about 24 hours, depending on the mass of glass. The drying step facilitates removal of moisture and organic materials, and may also serve to render organic compounds such as paper and plastic inert in the composites.

In some embodiments, the glass has a particle size less than about 5 mm, or less than about 4 mm, or less than about 3 mm, or less than about 2 mm, or less than about 1 mm. In other embodiments, the glass has a particle size less than about 900 microns, or less than about 800 microns, or less than about 700 microns, or less than about 600 microns, or less than about 500 microns, or less than about 400 microns, or less than about 300 microns, or less than about 200 microns, or less than about 150 microns, or less than about 120 microns, or between about 50 microns and about 150 microns. In one embodiment, the glass is waste glass that has passed through a 5 mm sieve.

In other embodiments, the glass has a particle size between about 1 micron and about 5 mm, or between about 1 micron and about 1 mm, or between about 1 micron and about 500 microns, or between about 1 micron and about 300 microns, or between about 1 micron and about 200 microns, or between about 1 micron and about 100 microns, or between about 1 micron and about 80 microns.

In further embodiments the glass has a particle size between about 40 microns and about 100 microns, or between about 25 microns and about 250 microns, or between about 50 microns and about 200 microns, or between about 20 microns and about 500 microns, or between about 10 microns and about 500 microns, or between about 10 microns and about 750 microns. In further embodiments, the glass is provided in the form of particles or granules having a size between about 40 microns and about 5 mm. Where high mechanical strength is required, it is preferred that glass powder be used to produce the composites.

In the present composites, interactions between organic and inorganic materials may lead to inferior bonding adhesion as a result of poor wettability on the surface of each component. The binder comprises hydrocarbons which are hydrophobic, whereas glass is hydrophilic. As such, in some embodiments the composites may further comprise a coupling agent. The coupling agent reacts with the glass surface to provide a functionalised surface which enhances reactivity with the binder. Without wishing to be bound by any particular theory, it is thought that once attached to the glass surface the coupling agent improves the contact angle or wettability of the binder on the glass surface, thereby enhancing bonding between the glass and the binder.

In one embodiment, the coupling agent is a silane. Silane coupling agents typically have the following structure: $(RO)_3$-Si-R'-X, wherein X is an organofunctional group, R' is an alkylene linkage and RO is a hydrolyzable group, such as for example an alkoxy group. The hydrolyzable group reacts with hydroxy groups on the glass to provide a functionalised surface, the organofunctional groups then react with the binder to form strong covalent bonds which enhance the strength of the composite. In one embodiment, the silane is β-(3,4-epoxycyclohexyl)-ethyltrimethoxysilane. In another embodiment, the silane is 3-glycidoxypropyltrimethoxysilane. Other suitable silanes will be known to those skilled in the art. Typically, the glass is pre-treated with the coupling agent prior to being reacted with the binder.

In other embodiments, the coupling agent may be a maleic polyolefin-based coupling agent. Maleic polyolefin-based coupling agents may be used to enhance bonding between glass and polyolefin binders (for example polyethylene (PE), polypropylene (PP), high density polyethylene (HDPE) or polyvinyl chloride (PVC)). The coupling agent comprises two main components, one of the polyolefin-type polymers (listed above) and maleic anhydride functional groups grafted onto the polymer backbone. When the grafted polyolefin coupling agent is melted with a polymer of similar composition (for example, maleic anhydride-grafted-PE with PE or MA-PP coupling agent with PP) and then cooled, the polymer group in the coupling agent crystallises and bonds with the polymer base, while the maleic anhydride group in the coupling agent reacts with hydroxyl groups of the glass to form strong covalent ester linkages.

The coupling agent may be present in an amount between about 0.5% and about 3% by weight, or in an amount between about 0.5% and about 2% by weight, based on the weight of the glass included in the composite.

In some embodiments, not according to the invention, the paper cups are single-use paper cups, such as for example single-use paper coffee cups. Single-use paper cups used for other drinks, such as soft drinks, water, slushies and the like may also be used. In Australia it is estimated that 1 billion paper coffee cups are discarded each year. Many of these cups end up in landfill. Preferably, the paper cups have a moisture content of less than about 10%, 9%, 8%, 7%, 6%, 5%, 4%, 3%, 2% or 1%.

Examples of textiles that may be included in the composites include, but are not limited to, clothing, linen, bedding, blankets and curtains. It is estimated that Australians discard approximately 23 kg of clothing per person per year and that approximately 85% of this ends up in landfill. In some embodiments, the textile may be a synthetic textile. Preferably, the textiles have a moisture content of less than about 10%, 9%, 8%, 7%, 6%, 5%, 4%, 3%, 2% or 1%.

In the city of Sydney alone, about 3000 tonnes of coffee grounds are produced by cafes and coffee shops alone. The majority of these grounds are either sent to landfill or flushed down sinks. Conveniently, with the exception of drying, coffee grounds can be incorporated into the present composites without any further processing. However, in some embodiments the coffee grounds may be screened through 1 mm mesh in order to provide a more consistent particle size. Preferably, the coffee grounds have a moisture content of less than about 10%, 9%, 8%, 7%, 6%, 5%, 4%, 3%, 2% or 1%.

The composites may also comprise one or more pigments. Pigments may be selected depending on the desired colour of the composites. In one embodiment, a natural pigment such as $TiO_2$, $Fe_2O_3$, carbon or fly ash is added in the form of a powder. In other embodiments, synthetic powders or liquid pigments can be incorporated into the present composite products to yield diverse colour palettes.

The composites may further comprise a coating. The coating provides the composite with improved wear and water resistance properties, as well as a smooth surface finish. In some embodiments, the coating may be an epoxy coating, a polyaspartic or a polyurethane coating. The coating may have a Shore D hardness value between about 70 and 90, or about 80.

By using waste streams to prepare the composite products, waste materials that would otherwise be disposed of in landfill are used to prepare valuable new products. In one embodiment the composite products may be prepared in the form of panels which can be used as internal horizontal surfaces, such as tabletops and benchtops. Because the panels are made from waste materials they are cheaper to produce than, for example, stone and artificial stone panels, yet have an appearance and feel which is very similar. In other embodiments the composite products may be used as wall cladding or splashbacks.

The composites may comprise greater than about 50%, or greater than about 60%, or greater than about 70%, or greater than about 80% by weight of waste material.

In some embodiments the composites comprise:

- between about 50% and about 90% by weight glass;

- between about 1% and about 20% by weight of the at least one filler; and

- between about 10% and about 45% of the binder.

In other embodiments the composites comprise:

- between about 50% and about 80% by weight glass;

- between about 2% and about 15% by weight of the at least one filler; and

- between about 15% and about 40% of the binder.

In further embodiments the composites comprise:

- between about 60% and about 70% by weight glass;

- between about 5% and about 10% by weight of the at least one filler; and

- between about 20% and about 35% of the binder.

In further embodiments the composites comprise:

- between about 55% and about 75% by weight glass;

- between about 2.5% and about 15% by weight of the at least one filler; and

- between about 15% and about 40% of the binder.

In further embodiments the composites comprise:

- between about 65% and about 75% by weight glass;

- between about 2.5% and about 7.5% by weight of the at least one filler; and

- between about 20% and about 30% of the binder.

In yet further embodiments the composites comprise:

- between about 55% and about 65% by weight glass;

- between about 2% and about 10% by weight of the at least one filler; and

- between about 30% and about 40% of the binder.

In the foregoing embodiments, the glass may have any particle size as defined herein.

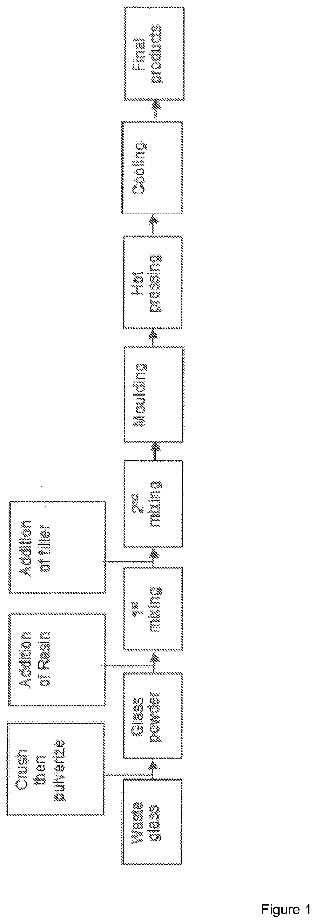

Composites in accordance with the invention may be prepared by hot pressing. In one embodiment, the composites may be prepared by hot pressing as shown in Figure 1. In this embodiment, waste glass is crushed by, for example, a hammer or jaw crusher and dried in an oven to remove moisture. The waste glass cullet is then ground into a powder. An appropriate resin and a catalyst/hardener are then combined and subsequently mixed with the glass powder (denoted as "1st mixing") so as to form a thick paste. The filler is then added to the paste with further mixing (denoted as "2nd mixing") to obtain the final blend. The final blend is then moulded to the desired shape in a die, sealed with a lid and loaded into a hydraulic press. Following compacting, the product is cooled and then removed from the die.

Pre-mixing of the glass powder and resin prior to addition of the filler may prevent excessive amounts of resin being absorbed by the filler(s), which are highly absorbent. This two-step mixing minimises the amount of resin used and also avoids resin leakage from the filler during compaction. Typically, the resin and glass powder are mixed for about 5 minutes, after which the filler is added followed by mixing for a further 5 minutes.

In another embodiment, the composites are prepared by forming a first mixture comprising the glass and the binder and mixing the first mixture; combining a catalyst with the first mixture to form a second mixture, and mixing the second mixture, and combining the at least one filler with the second mixture, and further mixing. Preferably, mixing is carried out with a Sigma (or z-arm) mixer. The resultant mixture may then be hot pressed as follows. The press and a carbon steel mould are pre-heated to a temperature of about 100 to about 200 °C, or about 135 to about 140 °C. A releasing agent (such as for example, calcium stearate) is then applied to the mould in order to facilitate removal of the composite after pressing. As an alternative, the releasing agent may be included in the mixture. The mixture is then hand-laid in the heated mould and flattened. A steel square lid is applied and the sealed die is then loaded into a hydraulic hot press and compacted under a pressure of about 150 bar for about 15 minutes. The composite is then removed from the mould. Optionally, the mould may be cooled to room temperature for at least 1.5 hours prior to demoulding. The manufactured panels may then be stored under a small load for about 24 hours in order to ensure flatness. In this embodiment the mixing may be carried out for between about 5 minutes and about 1 hour, or between about 15 minutes and about 45 minutes, or about 30 minutes. Typically, hot pressing is performed at a temperature between about 80 °C and about 250°C, or at a temperature between about 80 °C and about 200 °C, at a pressure between about 100 bar and about 550 bar.

In alternative embodiments, the composites may be prepared by casting. Casting involves forming a mixture comprising the glass, binder and at least one filler, loading the mixture into a mould base, levelling the mixture and then applying a lid. A vacuum is then applied to the mixture. Typically the vacuum is applied for about 12 to 24 hours at a pressure of about 30 mm Hg. The cured composite is then removed from the mould.

In another embodiment the composites are prepared by forming a first mixture comprising an inhibitor and the binder, and mixing the first mixture; combining the glass and a catalyst with the first mixture to form a second mixture, and mixing the second mixture, and combining the at least one filler with the second mixture, and further mixing. Preferably, the first mixture is allowed to stand for at least about 2 hours after mixing. This allows reaction between the resin and inhibitor to occur prior to introduction of the catalyst. The resulting mixture is mixed for about 5 minutes using a hand mixer. The mixture is then poured into the mould base, and levelled. The mould top is then placed on top of the mix. The entire casting slab is then covered with a vacuum bag with a breather spread evenly across the mould top. The breather helps to improve air suction from the bag to the vacuum pump. Vacuum pressure between about 1 mm Hg and about 200 mm Hg, or between about 10 mm Hg and about 50 mm Hg, or about 30 mm Hg is applied to the slab for at least 12- 24 hours. Preferably, the pouring, levelling and application of vacuum pressure is completed within about 50 to 90 minutes, or more preferably about 60 minutes.

Preparation of the composites by hot pressing and casting is described in detail below.

## Examples

Composites in accordance with embodiments of the invention were prepared as follows:

## Example 1

Material Preparation

*Waste glass*

Mixed waste glass was crushed using a hammer or jaw crusher into 10-40 mm size aggregates and dried in an oven for 3 hours at 100 °C to remove moisture. The waste glass cullet was then ground into a fine powder using ring mills. During this process, if laminated glass is introduced the polyvinyl butyral layer stays in a 10- or 20- mm diameter globe and is easily removed by sieving through a 108 μm metal screen.

*Paper cups and textiles*

Paper cups and textiles were mechanically cut using a shredder to form 10 - 30 mm aggregates. Depending on the desired design of the final product, the paper cups and textiles can be further ground by knife mills to 0.5 mm size fibre. The latter will provide a more homogenous look in the final product. The paper cups and textiles are then dried in an oven to achieve a moisture level of below 5%, or for at least 3 hours at 100 °C.

*Coffee grounds*

Coffee ground were screened through 1 mm mesh and dried in an oven to achieve a moisture level of below 5%, or for at least 3 hours at 100 °C.

*Binder*

The binder used in this example was Epoxycast Clear Casting Resin available from Barnes Products Pty Ltd (http://www.barnes.com.au/epoxy-resin/epoxycast-clear-   casting-resin-1240?search   query=epoxycast&results=1). R180 epoxy resin from Allnex may also be used. The Epoxycast resin has characteristics of medium viscosity, non-toxic as well as good chemical and abrasion resistance. The resin was mixed with hardener at a volume ratio of 2 to 1. The resin became gelated within 20-40 minutes under isothermal reaction at room temperature.

<u>Methods</u>

*Method 1 - Preparation of a composite panel from waste glass and coffee grounds*

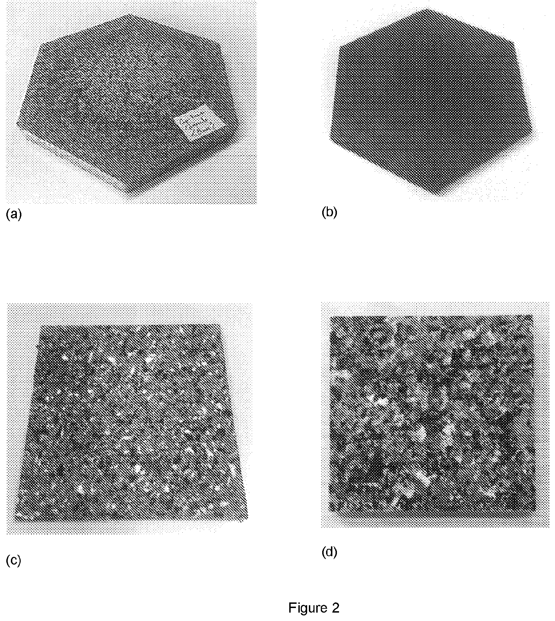

A panel having dimensions of 240 mm x 240 mm x 15 mm was prepared as follows:
960 g of mixed waste glass was mixed with 320 g resin for about 5 minutes. 320 g of coffee grounds were then added followed by another 5 minutes of mixing. The resulting mixture was hand-laid in a 240 mm x 240 mm carbon steel die, lined with a non-stick Teflon sheet. The mixture was then flattened and sealed with a square steel lid. The sealed die was loaded into a hydraulic hot press pre-heated to 80 °C and compacted under a pressure of 500 bar for 60 minutes. The mould was then cooled to room temperature for at least 30 minutes after which time the sample was removed from the steel mould/die. This panel is shown in Figure 2(b).

*Method 2 - Preparation of a composite panel from waste glass and textile*

A panel having dimensions of 240 mm x 240 mm x 15 mm was prepared as follows:
780 g of mixed waste glass was mixed with 260 g resin for about 5 minutes. 260 g of textile (in the form of a shredded polyester/cotton blend) were then added followed by another 5 minutes of mixing. The resulting mixture was hand-laid in a 240 mm x 240 mm carbon steel die, lined with a non-stick Teflon sheet. The mixture was then flattened and sealed with a square steel lid. The sealed die was loaded into a hydraulic hot press pre-heated to 80°C and compacted under a pressure of 500 bar for 60 minutes. The mould was then cooled to room temperature for at least 30 minutes after which time the sample was removed from the steel mould/die. This panel is shown in Figure 2 (d).

*Method 3 - Preparation of a composite panel from waste glass and waste coffee cups*

A panel having dimensions of 240 mm x 240 mm x 15 mm was prepared as follows:
780 g of mixed waste glass was mixed with 260 g resin for about 5 minutes. 260 g of waste coffee cups (as 0.5 mm fibres) were then added followed by another 5 minutes of mixing. T he resulting mixture was hand-laid in a 240 mm x 240 mm carbon steel die, lined with a non-stick Teflon sheet. The mixture was then flattened and sealed with a square steel lid. The sealed die was loaded into a hydraulic hot press pre-heated to 80 °C and compacted under a pressure of 500 bar for 60 minutes. The mould was then cooled to room temperature for at least 30 minutes after which time the sample was removed from the steel mould/die. This panel is shown in Figure 2 (a).

*Method 4 - Preparation of a composite panel from waste glass and waste coffee cups*

A panel having dimensions of 240 mm x 240 mm x 15 mm was prepared as follows:
780 g of mixed waste glass was mixed with 260 g resin for about 5 minutes. 260 g of waste coffee cups (as 10 mm to 40 mm aggregates) were then added followed by another 5 minutes of mixing. The resulting mixture was hand-laid in a 240 mm x 240 mm carbon steel die, lined with a non-stick Teflon sheet. The mixture was then flattened and sealed with a square steel lid. The sealed die was loaded into a hydraulic hot press pre-heated to 80 °C and compacted under a pressure of 500 bar for 60 minutes. The mould was then cooled to room temperature for at least 30 minutes after which time the sample was removed from the steel mould/die. This panel is shown in Figure 2 (c). Methods 3 and 4 are not according to the invention.

**Example 2**

Composites were prepared as set out below in Table 1 by hot pressing.

Table 1: Composites prepared by hot-pressing*

| | Bulk mass (100%) | | | | Additive sum up to mass weight >100% | | | |
|---|---|---|---|---|---|---|---|---|
| | Waste glass aggregate (< 5 mm) | Waste glass powder (75 - 150 $\mu$m) | SPE 44-419 Polyester resin | Textile | Calcium Stearate (Release agent) | TBPB (Catalyst) based on resin wt% | Butylated hydroxytoluene (Inhibitor) based on resin wt% | Silane coupling agent based on glass powder wt% |
| Polyester glass aggregate panel (sample 1) | 70 | | 20 | 10 | 2.5 | 3 | 0.3 | |
| Polyester fine powder panel (sample 2) | | 70 | 20 | 10 | 2.5 | 3 | 0.3 | |
| Polyester fine powder panel + silane (sample 3) | | 70 | 20 | 10 | 2.5 | 3 | 0.3 | 2 |
| *Glass used was Waste glass X (see Table 2 below) with a particle size of less than 5 mm. The waste glass powder (75-150 $\mu$m) was obtained by grinding the corresponding less than 5 mm glass using ring mills to a fine powder. | | | | | | | | |

Material Preparation

*Waste glass*

A number of different waste glasses were used. The chemical composition of these glasses was analysed by X-Ray fluorescence (XRF), and is shown in Table 2 below. The glass contained mostly $SiO_2$, $Na_2O$ and $CaO$, with small proportions of $Al_2O_3$ and $MgO$.

Table 2: XRF analysis of various types of waste glass

| Element | Float glass powder (%) | Waste glass X (%) | Battle sonic ( 75- 150 $\mu$m) | Envirosand Super fine glass aggregate (0.15 -0.71 mm) | Envirosand fine glass aggregate (0.5- 1,0 mm) |
|---|---|---|---|---|---|
| Na2O | 14.387 | 15.46 | 15.06 | 15.47 | 15.74 |
| MgO | 3.628 | 0.71 | 0.64 | 0.51 | 0.62 |
| Al2O3 | 1.087 | 1.69 | 1.92 | 1.36 | 1.42 |
| SiO2 | 71.216 | 70.79 | 69.81 | 70.17 | 71.48 |
| P2O5 | 0.019 | D.02 | 0.02 | 0.01 | 0.01 |
| SO3 | 0.177 | 0.04 | 0.03 | 0.04 | 0.04 |
| K2O | 0.248 | 0.35 | 0.62 | 0.26 | 0.30 |
| CaO | 8.931 | 10.85 | 10.93 | 10.94 | 11.06 |
| TiO2 | 0.063 | 0.02 | 0.05 | 0.02 | 0.02 |

(continued)

| Element | Float glass powder (%) | Waste glass X (%) | Battle sonic ( 75- 150 μm) | Envirosand Super fine glass aggregate (0.15 -0.71 mm) | Envirosand fine glass aggregate (0.5- 1,0 mm) |
|---|---|---|---|---|---|
| V2O5 | -0.023 | <0.01 | <0.01 | <0.01 | <0.01 |
| Cr2O3 | 0.003 | 0.043 | 0.11 | 0.03 | 0.04 |
| Mn3O4 | 0.012 | <0.01 | <0.01 | <0.01 | <0.01 |
| Fe2O3 | 0.174 | D.25 | 1.00 | 0.20 | 0.21 |
| NiO | 0.000 | <0.01 | <0.01 | <0.01 | <0.01 |
| CuO | 0.019 | <0.01 | <0.01 | <0.01 | <0.01 |
| ZnO | -0.005 | 0.01 | <0.01 | <0.01 | <0.01 |
| SrO | 0.009 | <0.01 | <0.01 | <0.01 | <0.01 |
| ZrO2 | 0.011 | <0.01 | <0.01 | <0.01 | <0.01 |
| BaO | -0.050 | 0.03 | 0.02 | <0.01 | 0.02 |
| HfO2 | -0.012 | <0.01 | <0.01 | <0.01 | <0.01 |
| PbO | 0.005 | <0.01 | <0.01 | <0.01 | <0.01 |
| L O I | - | <0.01 | ND | ND | ND |
| TOTAL | - | 100.26 | 100.21 | 99.01 | 100.96 |

The Waste glass X aggregate from (having a particle size less 5 mm) was dried in an oven at 400 °C for a period between about 1 hour and about 24 hrs (depending on the weight of glass) so as to remove moisture and organic materials, and to render organic compounds such as paper and plastic inert in the composites. This minimises the possibility of composites cracking when prepared by the hot-press production method. A portion of the waste glass aggregate was then pulverised into a fine powder using ring mills. The resulting powder is then shifted to a final particle size of about 75 microns to about 150 microns.

The waste glass may also be functionalised with a silane. The silane chosen was 3-glycidoxypropyltrimethoxysilane (CAS no.: 2530-83-8). In this case, about 1% to about 5% of the silane by weight may be used relative to the amount of glass intended for inclusion in the composite. In this example, 2% of the silane by weight is used relative to the amount of glass intended for inclusion in the composite.

*Paper cups and textiles*

Paper cups and textiles were mechanically shredded and detangled by a granulator to form a fine fibrous filler.

*Coffee grounds*

Coffee grounds were used as received following oven-drying at 100 °C for 24 hours.

*Resin*

The resin used in this example was a polyester resin sold by Allnex under the tradename Polyplex® Fillable Casting Resin. This resin is a pre-promoted, low reactivity, orthophthalic polyester resin.

*Additional components*

The following components are added: an inhibitor (butylated hydroxytoluene), a catalyst (t-butylperoxybenzoate) and a releasing agent (calcium stearate). A pigment may also be added, if desired.

Method

The composites in Table 1 were prepared according to the method set out in Scheme 1 below.

Scheme 1: Preparation of composites by hot pressing

Waste glass granules having particle sizes less than 5 mm are ground with a pulveriser to provide a glass powder having a particle size in the range of about 75 to 150 microns. This powder may be used as is to prepare the composites. Alternatively, the glass powder may be combined with a coupling agent (approximately 2% by weight with respect to the glass powder), water and ethanol and mixed to form a slurry. The resulting slurry is then dried in an oven at about 100 °C for about 24 hours and then further ground to provide a functionalised glass.

The components are then added to a Sigma mixer as follows:

- -Add the relevant amounts of the resin, inhibitor, glass powder, and optionally a pigment, and mix for about 30 minutes;

- Add the catalyst and mix for about 30 minutes;

- Add the textiles and mix for about 30 minutes.

The catalyst, resin and inhibitor should be mixed well prior to addition of the textiles. If desired, the resulting mixture may be stored for up to 30 days prior to hot pressing.

Prior to preparing the composite, the press and mould are pre-heated to about 135-140 °C. Calcium stearate is then applied to 300 x 300 or 500 x 500 mm pre-heated carbon steel moulds. The wet mixture is then hand-laid in the heated mould and flattened. A steel square lid is applied and the sealed die is then loaded into a hydraulic hot press and compacted under a pressure of 150 bar for 15 minutes. The mould is then cooled to room temperature for at least 1.5 hours prior to demoulding. The manufactured panels are then stored under a small load for 24 hours so as to ensure flatness and minimise the possibility of warping.

Properties of the composites

The mechanical properties of the composites prepared in Table 1 were assessed.

*Flexural strength*

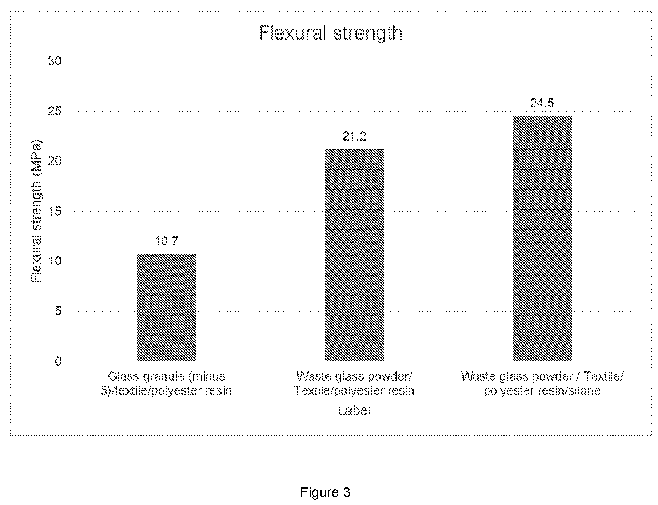

Flexural strength is defined as the ability of a material to resist deformation under load, and may be measured by the 4-point bending test. The maximum flexural stress or modulus of rupture (MOR) was measured using an Instron 5982 instrument. The dimension and span of the sample were evaluated according to the corresponding thickness of the sample. All samples were cut to 300x100x12 mm with the lower and upper span of the bending jig set to 120 and 60 m respectively, following ASTM C880/800M. A constant loading speed of 4 MPa/min was applied to the sample. The results are presented in Figure 3.

Figure 3 shows the flexural strength of samples 1, 2 and 3 following four-point bending. It was observed that sample 1 (i.e. the composite panel made from glass having a particle size of about 5 mm) had a flexural strength of 10.7 MPa. An increase in strength of nearly double that to 21.2 MPa was observed for sample 2 (i.e. the composite panel made with glass powder having a size ranging between about 75 $\mu$m and about 150 $\mu$m).

In the case of sample 3 (i.e. the composite panel made with glass powder having a size ranging between about 75 $\mu$m and about 150 $\mu$m and silane), a further improvement of around 3.4 MPa (or about 15%) is observed, which is directly attributable to the presence of the silane. It is thought that weak adhesion/lack of wettability between the non-polar glass and polar resin is the reason for the lower strength observed with samples 1 and 2 compared to sample 3. The weak adhesion/lack of wettability is likely overcome by improving interfacial adhesion by between the glass and polymer by use of silane as a coupling agent.

*Compressive strength*

The compressive strength test assesses the limit of a sample's strength under a constant compressive load and is evaluated by dividing the maximum load by the cross-section of the sample. The test criteria used in this example follow ASTM C170/C170-16 and were measured using an Instron 5892 instrument at a constant load rate of 0.5 MPa/s until fracture. All samples were sized to cubes having the dimension 12x12x12 mm$^3$, with a 10% maximum difference allowed between the axis.

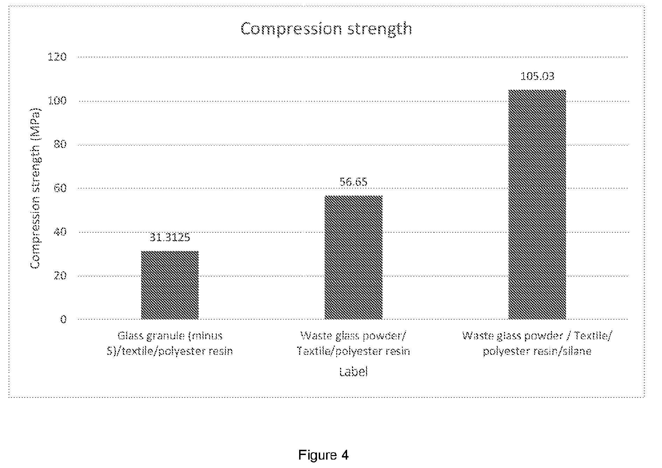

Figure 4 shows the compressive strength of samples 1, 2 and 3. On average, sample 1 had a low compressive strength of 31.31 MPa. Under load, the large, smooth interfacial region between the glass aggregate and resin becomes the defect from which cracks propagate. This effect is minimised in the case of samples 2 and 3 in which the micro-sized glass powder interlocks together and helps to slow crack propagation when the panel is compressed under load. With fine glass powder (75-150 $\mu$m), strength increases from 31.31 to 56.65 MPa (sample 2). A more pronounced increase in compression strength is observed in the case of sample 3. In this regard, the compression strength almost doubles to 105.03 due to better wetting and bonding between the resin and glass.

*Density*

Density of the samples was measured using a precision weighing scale and volume gas pycnometer. The volume gas pycnometer machine uses a gas displacement method and volume/pressure relationship to accurately calculate the sample volume. The measured mass and volume are used to calculate the sample density.

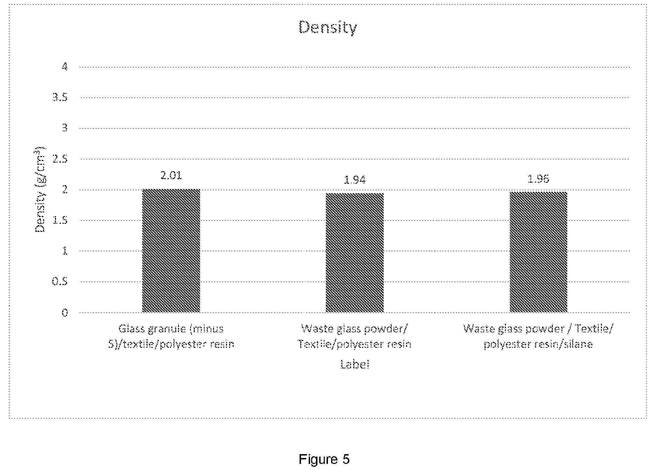

As shown in Figure 5, sample 1 was found to have a density of 2.01 MPa. This value is slightly higher when compared to samples 2 and 3 1.94 and 1.96 g/cm$^3$ respectively. Sample 1 contains high-density 1 - 5 mm glass aggregates (2.4 - 2.5 g/cm$^3$) that increase the overall density of the panel.

Each of the panels have a density lower than natural stone products (> 2.5 g/cm$^3$) and the combination of low density, and high flexural strength is expected to facilitate production of thinner countertop/tabletop slabs with longer span.

*Water absorption test*

Water absorption behaviour is useful in determining the durability of the composite products in high moisture environments. Excess water absorption can lead to swelling and a reduction in strength. Samples were initially weighed and then soaked in water for 24 hours, removed, patted dry and then weighed again. By measuring the weight difference between the dry and wet samples, water absorption can be calculated based on the following equation:

$$\text{Absorption weight\%} = [\frac{(B-A)}{A}] \times 100$$

wherein,

A = weight of the dried sample (g), and
B = weight of the sample after immersion (g)

The results are shown below in Table 3.

Table 3: Water absorption data of the hot press panels

| Sample | 1 | 1 | 2 | 2 | 3 | 3 |
|---|---|---|---|---|---|---|
| Dry weight | 64.8821 | 104.0970 | 88.6016 | 89.0792 | 77.0806 | 96.0482 |
| Weight after 24 hr immersion in water | 66.1245 | 105.5732 | 89.0914 | 89.5816 | 77.2833 | 96.2685 |
| Water absorption (%) after 24 hr | **1.91%** | **1.42%** | **0.55%** | **0.56%** | **0.26%** | **0.23%** |
| Weight after 48 hr immersion in water | 66.3712 | 106.2593 | 89.2209 | 89.7333 | 77.3493 | 96.3407 |
| Water absorption (%) after 48 hr | **2.29%** | **2.07%** | **0.61%** | **0.65%** | **0.34%** | **0.30%** |

From Table 3 it can be seen that water absorption is minimized when glass powder is used (i.e., samples 1 and 2). In this regard, a decrease from about 2% to about 0.65% was observed. A further decrease in water absorption to 0.3% was observed when a coupling agent was added. Without wishing to be bound by an particular theory, it is thought that the decrease in water absorption is due to the better dispersion of the polyester-glass powder matrix (which is hydrophobic), as well as fewer voids and micro porous areas when compared to the glass aggregate panel. All composite panels tested performed equal to, or better than, marble slabs which in general have a water absorption of around 2-4%.

*Scratch test*

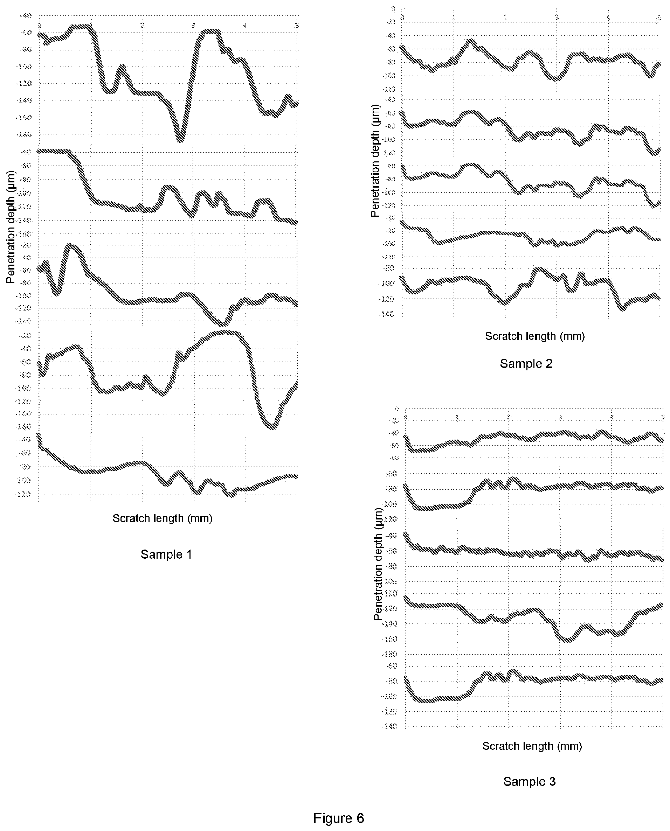

Scratch resistance of the composite products was also investigated. Scratch testing was performed by Macro scratch tester. A sharp diamond tip stylus was used to scratch the composite's surfaces at constant loads of 20 N within a 5 mm gouge mark. The penetration depth profile was then recorded. Due to the inhomogeneous nature of the composites, 5 scratches per sample were made in order to ensure accurate results. The results are presented in Table 4 and in Figure 6.

Table 4: Penetration depth of the hot press panels

| | Scratch test | | | | | |
|---|---|---|---|---|---|---|
| | Scratch 1 | Scratch 2 | Scratch 3 | Scratch 4 | Scratch 5 | Min - Max |
| Sample 1 | 52.37-187.21 | 38.3 - 142.79 | 20.69 - 145.10 | 14.75 - 162.24 | 32.06 - 120.05 | 14.75 - 187.21 |
| Sample 2 | 48.32 - 105.73 | 58.87 - 107.36 | 53.92 - 119.95 | 67.5 - 103.28 | 81.65 - 134.84 | 48.32 - 134.84 |
| Sample 3 | 28.51 - 113.54 | 39.48 - 135.22 | 105.43 - 162.54 | 67.08 - 106.50 | 39.82 - 73.33 | 28.51 - 162.54 |

As seen in Table 4, the penetration profile of sample 1 is between 14.75 and 187.21 $\mu$m. Scratch resistance is improved when glass powder is used.

*Wear test*

Wear testing was performed in order to evaluate the performance of the composite products over time. A ruby ball of 5 mm diameter under an applied load of 10 N was used to indent the samples and oscillate from 0 to 50 mm mark for 6000 cycles at 5 cm/s. The depth profile was then measured under a profilometer. The results are shown in Figure 6.

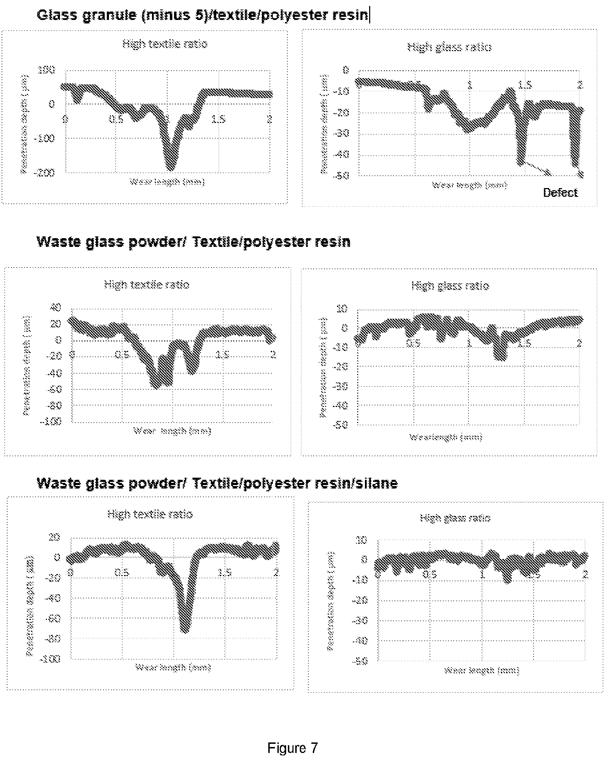

As seen in Figure 7, on average, the composite panels show a penetration depth of as low as 10 - 30 $\mu$m when wear testing is performed on a surface with a high glass ratio. However, when wear testing was done on a surface having a high textile ratio, the wear resistant values decrease to as low as 200 $\mu$m for glass aggregate panels and 55 to 70 $\mu$m for

fine glass panels.

Without wishing to be bound by any particular theory, it is thought that the superior wear resistant properties of the fine glass panels compared to the glass aggregate panels is due to the combination of glass powder and resin that forms a semi brittle matrix.

*Stain test*

Stain resistance of the composite panels was tested against 11 different types of food, including milk, coffee, soy sauce, coke, beetroot, olive oil, red wine, tomato sauce, turmeric, butter and lemon. Resistance to 3 types of cleaning agents (Windex®, dishwashing liquid and baking powder) was also tested. The stains were applied for 1, 4 and 24 hours and then removed by the methods listed below in Table 5. The cleanability is then classified into 6 different classes as follows:

Table 5: Stain removal methods

|  | Stain removed: |
|---|---|
| Class 1 | With damp cloth |
| Class 2a | With General-purpose surface spray |
| Class 2b | With rotating brush and general-purpose surface spray |
| Class 3a | With damp cloth and "Hard surface cleaner/Sugar soap" |
| Class 3b | With rotating brush and "Hard surface cleaner/sugar soap" |
| Class 4 | After blotting with acetone and clean white cloth for no more than 3 minutes |
| Class 5 | After 24 hours immersion in acetone |
| Class 6 | Stain not removed |
| Note | All steps required hard cleaning/ scrubbing with damp cloth for 2 minutes. For each step, dry the surface with hair dryer before moving to the next step. |

The results are presented in Tables 6, 7 and 8.

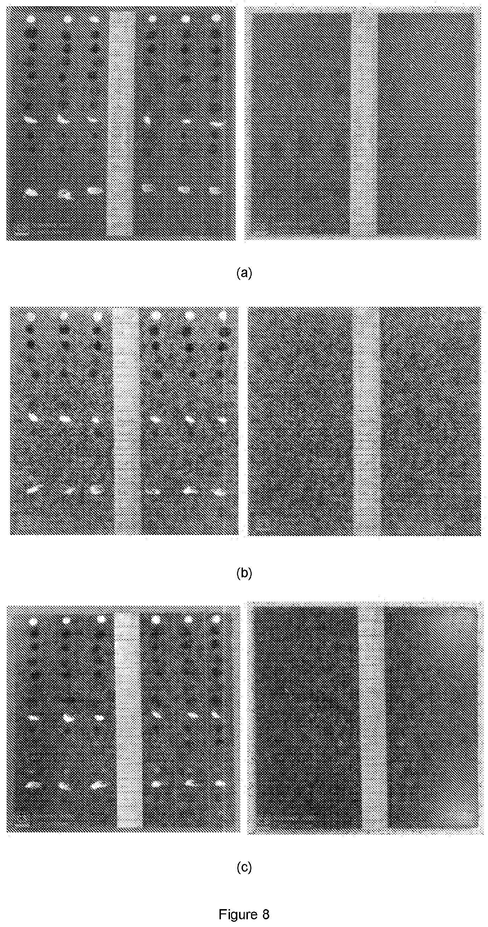

Figure 8 visually depicts stain-resistance. Sample 1 showed the least stain resistance due to its porous nature. Stains from red wine, dishwashing liquid, olive oil and butter could not be removed even after a sealer was applied. Slightly lighter stains were observed with sealer and less stain soaking time. Stain-resistance is improved when panels are made from glass powder. No significant stain is observed for both non-silane and silane treated panels. A slight coffee stain remains on the untreated glass powder textile panels.

Table 6: Stain resistance of sample 1

| Stain agent | No sealer | | | With Crommelin sealer | | |
|---|---|---|---|---|---|---|
| | 1 hour | 4 hours | 24 hours | 1 hour | 4 hours | 24 hours |
| | Class | | | | | |
| Milk | 1 | 2 | 2 | 1 | 2 | 2 |
| Coffee | 1 | 3 | 3 | 1 | 3 | 3 |
| Soy | 1 | 1 | 1 | 1 | 1 | 1 |
| Coke | 1 | 1 | 1 | 1 | 1 | 1 |
| Red wine | 4 | 6 (Light stain) | 6 (Stain not removed) | 4 | 6 (Light stain) | 6 (Stain not removed) |
| Dishwashing liquid | 4 | 6 (Light stain) | 6 (Stain not removed) | 4 | 6 (Light stain) | 6 (Stain not removed) |
| Windex | 1 | 1 | 1 | 1 | 1 | 1 |
| Baking soda | 1 | 1 | 1 | 1 | 1 | 1 |
| Beetroot | 1 | 1 | 1 | 1 | 1 | 1 |
| Olive oil | 6 (Stain not removed) | 6 (Stain not removed) | 6 (Stain not removed) | 6 (Light stain) | 6 (Light stain) | 6 (Stain not removed) |
| Tomato sauce | 1 | 1 | 1 | 1 | 1 | 1 |
| Tumeric | 1 | 1 | 1 | 1 | 1 | 1 |
| Butter | 6 (Stain not removed) | 6 (Stain not removed) | 6 (Stain not removed) | 4 | 6 (Light stain) | 6 (Stain not removed) |
| Lemon | 1 | 1 | 1 | 1 | 1 | 1 |

Table 7: Stain resistance of sample 2

| Stain agent | No sealer | | | With Crommelin stone sealer | | |
|---|---|---|---|---|---|---|
| | 1 hour | 4 hours | 24 hours | 1 hour | 4 hours | 24 hours |
| | Class | | | | | |
| Milk | 1 | 4 | 6 (Light stain) | 1 | 4 | 6 (Light stain) |
| Coffee | 1 | 2 | 2 | 1 | 2 | 2 |
| Soy | 1 | 1 | 1 | 1 | 1 | 1 |
| Coke | 1 | 1 | 1 | 1 | 1 | 1 |
| Red wine | 1 | 2 | 2 | 1 | 1 | 1 |
| Dishwashing liquid | 1 | 1 | 1 | 1 | 1 | 1 |
| Windex | 1 | 1 | 1 | 1 | 1 | 1 |
| Baking soda | 1 | 1 | 1 | 1 | 1 | 1 |
| Beetroot | 1 | 1 | 1 | 1 | 1 | 1 |
| Olive oil | 1 | 1 | 1 | 1 | 1 | 1 |
| Tomato sauce | 1 | 1 | 1 | 1 | 1 | 1 |
| Tumeric | 1 | 1 | 1 | 1 | 1 | 1 |
| Butter | 1 | 1 | 1 | 1 | 1 | 1 |
| Lemon | 1 | 1 | 1 | 1 | 1 | 1 |

Table 8: Stain resistance of sample 3

| Stain agent | No sealer | | | With Crommelin stone sealer | | |
|---|---|---|---|---|---|---|
| | 1 hour | 4 hours | 24 hours | 1 hour | 4 hours | 24 hours |
| | Class | | | | | |
| Milk | 1 | 2 | 2 | 1 | 2 | 2 |
| Coffee | 1 | 2 | 2 | 1 | 2 | 2 |
| Soy | 1 | 1 | 1 | 1 | 1 | 1 |
| Coke | 1 | 2 | 2 | 1 | 2 | 2 |
| Red wine | 1 | 1 | 1 | 1 | 1 | 1 |
| Dishwashing liquid | 1 | 1 | 1 | 1 | 1 | 1 |
| Windex | 1 | 1 | 1 | 1 | 1 | 1 |
| Baking soda | 1 | 1 | 1 | 1 | 1 | 1 |
| Beetroot | 1 | 1 | 1 | 1 | 1 | 1 |
| Olive oil | 1 | 1 | 1 | 1 | 1 | 1 |
| Tomato sauce | 1 | 1 | 1 | 1 | 1 | 1 |
| Tumeric | 1 | 1 | 1 | 1 | 1 | 1 |
| Butter | 1 | 1 | 1 | 1 | 1 | 1 |
| Lemon | 1 | 1 | 1 | 1 | 1 | 1 |

**Example 3**

Composites were prepared as set out below in Table 1 by casting. Mix C1.0 and C1.1 are not according to the invention.

Table 9: Composites prepared by casting*

| Code: X-X-X Secondary Filler (T/C/P) - Fine filler type - no. of adjustment | | Bulk mass (100%) | | | | Additive (sum up to mass weight > 100%) | | |
|---|---|---|---|---|---|---|---|---|
| | | Glass bead (45 μm -90 μm) | Waste glass powder (75-150 μm)* | Polyester resin | Secondary filler | Inhibitor (TBC) from resin wt% | MEKP catalyst from resin wt% | Silane from glass powder wt% |
| Textile | Mix T.1.0 | 70 | | 25 | 5 | 0.1 | 1 | |
| | Mix T.1.1 | 65 | | 30 | 5 | 0.1 | 1 | |
| | Mix T.1.2 | 60 | | 35 | 5 | 0.1 | 1 | |
| | Mix. T.2.0 | | 60 | 35 | 5 | 0.1 | 1 | |
| | Mix T.2.1 | | 60 | 35 | 5 | 0.1 | 1 | 2 |
| | Mix T.2.2 | | 65 | 30 | 5 | 0.1 | 1 | 2 |
| | Mix T.3.0 | | 70 (with granule -5mm) | 25 | 5 | 0.1 | 1 | |
| Coffee cups | Mix C.1.0 | | 60 | 35 | 5 | 0.1 | 1 | |
| | Mix C.1.1 | | 60 | 35 | 5 | 0.1 | 1 | 2 |

(continued)

| Code: X-X-X Secondary Filler (T/C/P) - Fine filler type - no. of adjustment | | Bulk mass (100%) | | | | Additive (sum up to mass weight > 100% | | |
|---|---|---|---|---|---|---|---|---|
| | | Glass bead (45 $\mu$m -90 $\mu$m | Waste glass powder (75-150 $\mu$m)* | Polyester resin | Secondary filler | Inhibitor (TBC) from resin wt% | MEKP catalyst from resin wt% | Silane from glass powder wt% |
| Coffee powder | Mix P.1.0 | | 60 | 35 | 5 | 0.1 | 1 | |
| | Mix P.1.1 | | 60 | 35 | 5 | 0.1 | 1 | 2 |
| *Glass used was Waste glass X (see Table 2) which was obtained by grinding using ring mills to a fine powder. | | | | | | | | |

Material Preparation

The glass, paper cups, textiles, coffee grounds and resin were prepared as described above in Example 2. The catalyst used was MEKP and the inhibitor used was 4-t-butylcatechol (TBC). The glass beads were obtained from Burwell Technologies, Revesby NSW.

Method

The composites in Table 9 were prepared according to the method set out in Scheme 2 below.

Scheme 2: Preparation of composites by casting

Waste glass granules having particle sizes less than 5 mm are ground with a pulveriser to provide a glass powder having a particle size in the range of about 75 to 150 microns. This powder may be used as is to prepare the composites. Alternatively, the glass powder may be combined with a coupling agent (approximately 2% by weight with respect to the glass powder), water and ethanol and mixed to form a slurry. The resulting slurry is then dried in an oven at about 100 °C for about 24 hours and then further ground to provide a functionalised glass.

*Mould preparation*

The mould base is made with a stone slab. The sides and top of the mould were made from melamine-faced-particleboard. The dimension of the mould ranged from 0.09 $m^2$ to 4 $m^2$. For the purpose of this study, a mould size of 1200 x 900 x 26 $mm^3$ was prepared. Preferably, a mould releasing agent should be applied to the mould at least 5 times to prevent the mixture from sticking to the stone.

*Casting*

In this example, Mix T.1.0 in Table 9 was selected.

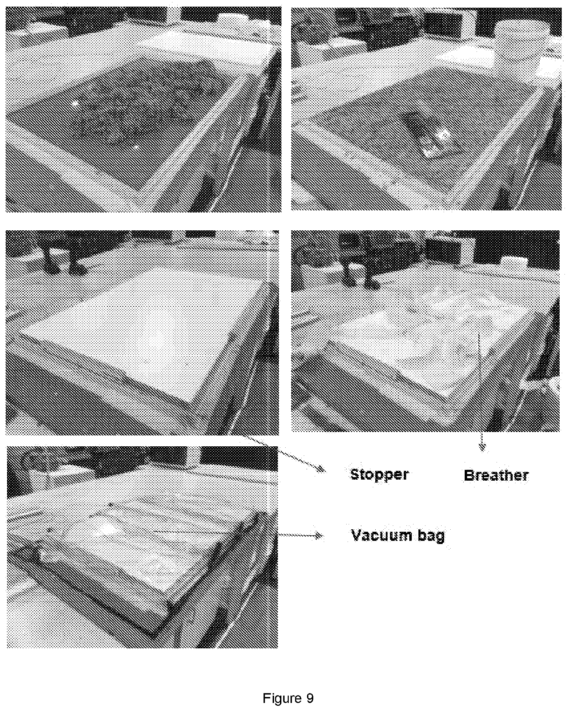

First, the inhibitor and resin are mixed and allowed to stand for at least 2 hours. This allows reaction between the resin and inhibitor to occur before the catalyst is introduced. Preferably, the ratio of the inhibitor to the resin is not more than 0.1% by weight. This is to avoid a situation where the resin mix does not completely cure. The "inhibitor - resin" mixture is then combined with the glass and catalyst, followed by the filler. The resulting mixture is mixed for about 5 minutes using a hand mixer. The mixture is then poured into the mould base, and levelled using a trowel and scrapper. The mould top is then placed on top of the mix. A stopper is also applied to prevent over-pressing and to ensure equal thickness across the panels. The entire casting slab is then covered with a vacuum bag with a breather spread evenly across the mould top. The breather helps to improve air suction from the bag to the vacuum pump. Vacuum pressure of 30 mm Hg is applied to the slab for at least 12- 24 hours. Preferably, the pouring, levelling, pressing and application of vacuum pressure should be done within about 50 to 90 minutes, or more preferably about 60 minutes. The casting process is shown in Figure 9.

The cured composite panel is then removed from the mould the following day. Rudimentary investigation reveals that the composite panels including textiles have better stability compared to panels comprising waste glass/resin alone. Minimal shrinkage and zero warpage was observed even at shorter vacuum times (< 24 hours). This may be due to the fibre characteristics of textile that prevent shrinkage/ warpage, and the presence of less resin by volume. Comparative polyester-glass panels without textiles showed a warpage of around 0.6 mm per 1-meter slab length.

Some of the cast panels prepared possessed a number of pinholes and had a slightly rough surface in a few areas. This may be easily addressed by hand-filling with a glass powder/polyester mix/pigment (75/25 ratio) and hand-polishing with an orbital sander (240 grit).

The panel may then be top coated with polyurethane (shore D: 80) and left for 24 hours until the coating is completely cured. The hardness of the coating will continue to develop as time progresses.

Properties of the composites

The mechanical properties of the composites prepared in Table 9 were assessed.

*Flexural strength*

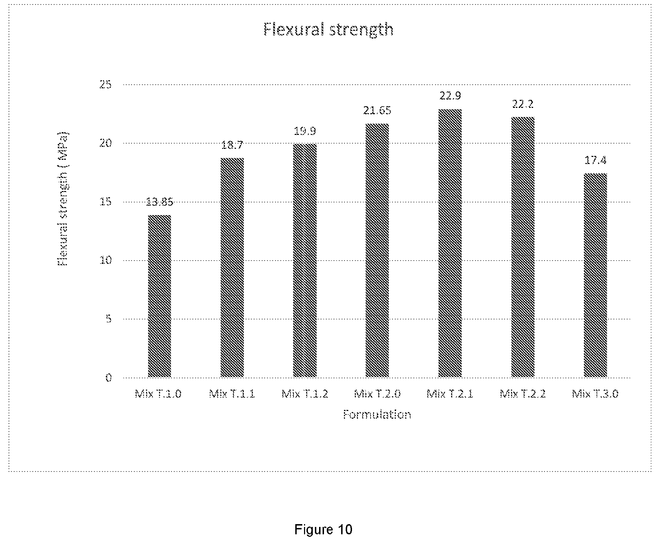

The flexural strength of the panels was measured based on ASTM C880/800M as outlined above. The samples are cut to 250x100x26 mm with the lower and upper span of the bending jig set to 260 and 130 m respectively following the ASTM requirement. The results are presented in Figure 10.

It is seen that the flexural strength increases as the amount of resin increases. Between 30% and 35% resin content, the difference in flexural strength is less significant (about 1.2 MPa) compared to when the resin is present at 25% (about 5 MPa).

The flexural strength improves when the glass bead is substituted with waste glass powder as shown in Mix T.2.0. The waste glass powder, having irregular shapes, allows better interlocking among the particulates, thereby increasing flexural stress. On the contrary, the glass bead having a round morphology does not effectively resist the bending stress.

Flexural strength may also be improved by using a coupling agent. To achieve high flexural strength, adhesion between the resin and glass powder filler needs to be improved. The glass powder is inorganic and offers poor covalent bonding to the organic polymer resin. This bonding can be improved by use of a coupling agent. Mix T.2.1 shows an average improvement of around 1 MPa with coupling agent addition.

*Compressive strength*

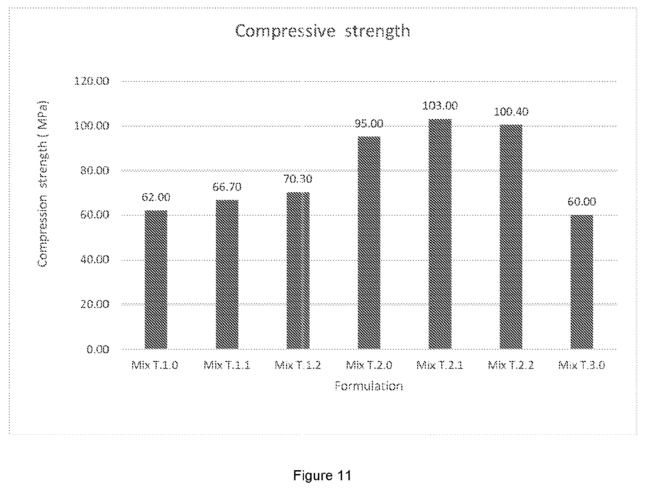

The compressive strength was evaluated as described above. All samples were sized to cubes having the dimension 26x26x26 mm$^3$, with a 10% maximum difference allowed between the axis. The results are shown in Figure 11.

It is observed that there is a similar trend between the flexural and compressive strength of the corresponding mixtures. Higher resin content increases compressive strength, as observed from Mix T.1.0, Mix T.1.1 and Mix T.1.2. Compressive strength also increases by more than 20% to 95 MPa when the glass bead is substituted with waste glass powder. A further increase of 8 MPa from 95 to 103 MPa is observed between Mix T.2.0 and T.2.1 when a silane coupling agent is added. Mix T.2.2 with 5% less resin than T.2.1 shows only a slight decrease in performance.

*Density*

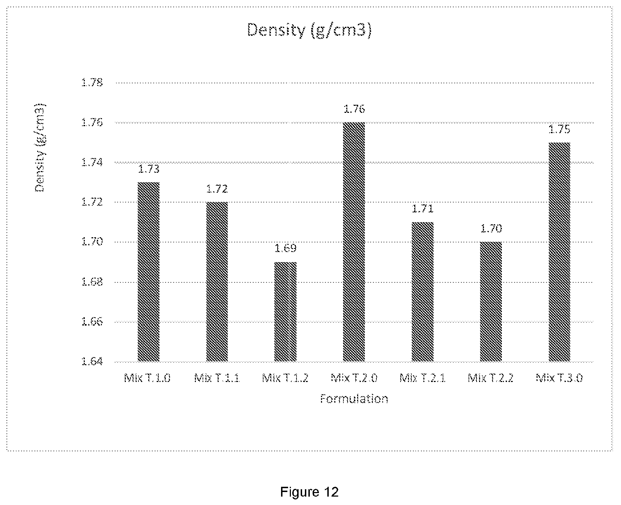

Density of the samples was measured as described above. The results are shown in Figure 12. It can be seen from Figure 12 that, on average, the density of the panels with textile addition is around 1.70 g/cm$^3$. The combination of low density, and high flexural strength is expected to facilitate production of thinner countertop/tabletop slabs with longer span.

*Water absorption test*

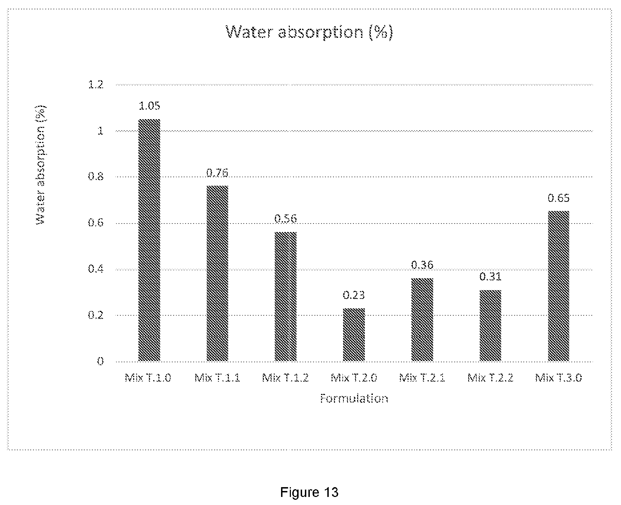

A water absorption test was performed as described above. The results are shown in Figure 13.

It was observed that most of the composite panels with textile fillers have water absorption of less than 1%. Note that the data above is measured on 20x20x20 mm$^3$ samples and no coating. The composites are shown to perform better than marble slabs which have water absorption of 2-4%. However, application of a clear polyurethane coating is recommended when used in a wet environment in order to ensure excellent water-resistance and a smooth surface finish.

*Scratch test*

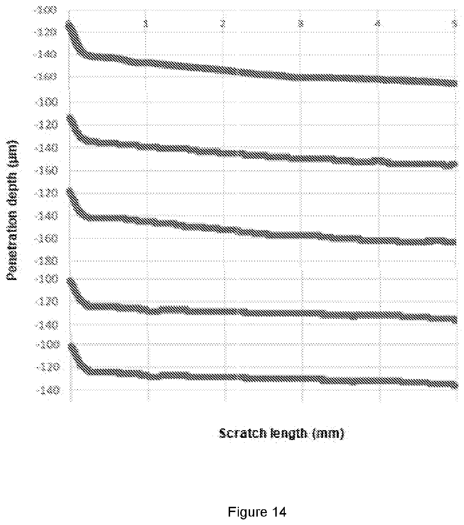

A scratch test was performed as described above. In this instance the scratch test was performed on the hard polyurethane or glass epoxy coating with shore D 80 that would typically be applied to the composite panels. As seen in Figure 14, it is observed from 5 different scratch marks that the corresponding coating showed a minimum penetration depth of 101.95 to 164.37 $\mu$m at 20 N load. The coating is slightly inferior to marble stone, which has a value of around 80 - 100 $\mu$m at the same load. To minimize scratches, the composite surface is preferably polished to a satin finish. A self-adhesive protective PET coating layer may also be added to maintain the look of the composite and prevent scratches during normal use.

*Wear test*

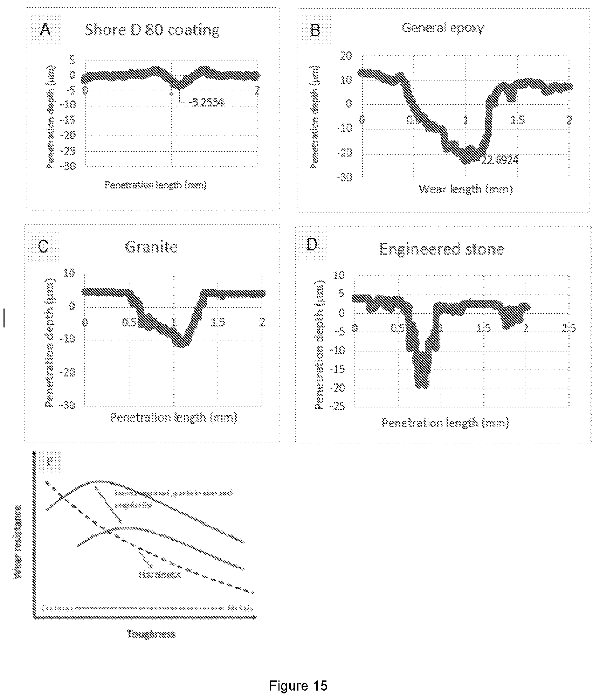

Wear testing was performed as described above. It is seen from Figure 15 that the coating shows a lower penetration depth of 3 $\mu$m when compared to a general epoxy coating, which has a value of 22 $\mu$m. The wear of the shore D80 coating is also much better compared to granite and engineered stone with penetration depths of -11.6 and 19 $\mu$m respectively.

*Stain test*

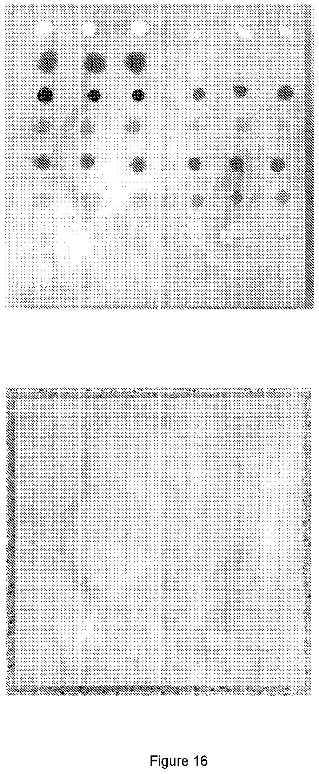

Stain resistance of the coating was measured according to the process described above. The results are shown below in Table 10 and in Figure 16.

Table 10: Stain resistance of the coating

| Stain agent | Grade | | |
|---|---|---|---|
| | 1 hour | 4 hours | 24 hours |
| Milk | 1 | 1 | 1 |
| Coffee | 1 | 1 | 1 |
| Soy | 1 | 1 | 1 |
| Coke | 1 | 1 | 1 |
| Red wine | 1 | 1 | 1 |
| Dishwashing liquid | 1 | 1 | 1 |
| Windex | 1 | 1 | 1 |
| Baking soda | 1 | 1 | 1 |
| Beetroot | 1 | 1 | 1 |
| Olive oil | 1 | 1 | 1 |
| Tomato sauce | 1 | 1 | 1 |
| Turmeric | 2a | 2b | 2b |
| Butter | 1 | 1 | 1 |
| Lemon | 1 | 1 | 1 |

*Properties of the composites comprising glass/polyester resin and coffee cups/coffee grounds*

Mechanical properties of additional composites prepared are presented below. These composites comprise different combinations of glass, resin, textile, coupling agent, coffee grounds and coffee cups.

*Flexural strength*

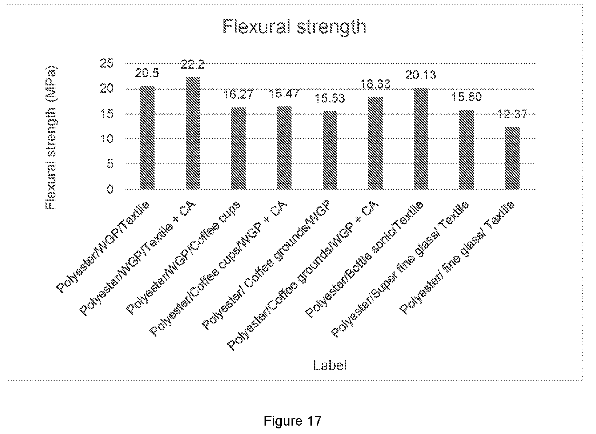

The flexural strength of the panels was measured based on ASTM C880/800M as outlined above. The results are shown in Figure 17.

All panels have a ratio of polyester : glass : filler of 65:30:5, with some having a coupling agent in an amount of 2% (by weight with respect to the amount glass). Strength decreased when textile was substituted with coffee cups and grounds with a flexural strength drop from 20.5 to 16.27 and 15.53 MPa respectively. The addition of the silane coupling agent improves the flexural strength by 1 - 20% as shown in bars 1-2, 3-4, and 5-6 in Figure 17.

The "Bottle sonic", "fine glass" and "Super fine glass" aggregates are those noted above in Table 2. "WGP" refers to the Waste Glass X powder (75 - 150 $\mu$m). It is noted that the manually ground fine waste glass with ring mills (Bar 1) and bottle sonic (Bar 7), show a similar result in flexural strength with a value of 20.5 and 20.13 MPa respectively. This is due to the similar fine particle size of glass powder. Flexural strength is observed to decrease when glass particle size increases. In this regard, panels made from super fine and fine glass with particle sizes of 0.15 - 0.71 mm and 0.5 - 1.0 mm have a flexural strength of 15.80 and 12.37 MPa, respectively.

*Compressive strength*

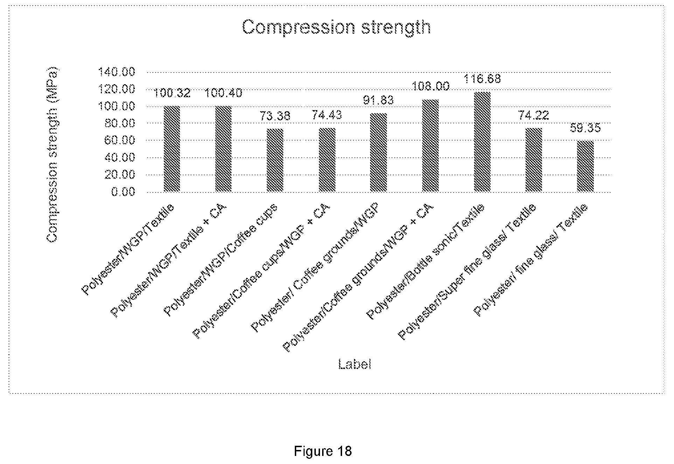

The compressive strength was evaluated as described above. The results are shown in Figure 18. It can be observed that there is a similar trend between the flexural and compressive strength of the corresponding composites. Compressive strength decreases by 27% and 8% respectively to 73.38 and 91.83 MPa when the textile is substituted with coffee cups and coffee grounds. A small increase in the average compressive strength of textile, coffee cups and coffee ground panels are observed when a coupling agent is added, with a significant increase of 18% is observed in the coffee ground panel.

It is also observed that the bottle sonic (Bar 7 with a particle size of 75-150 $\mu$m), shows a compressive strength of 116.8 MPa, which is significantly higher as compared to the manually ground glass with the same particle size. Furthermore, the compressive strength is observed to decrease when the glass particle size increases. In this regard, panels made from super fine and fine glass with particle sizes of 0.15 - 0.71 mm and 0.5 - 1.0 mm, have a compressive strength of 74.22 and 59.35 MPa respectively.

*Density*

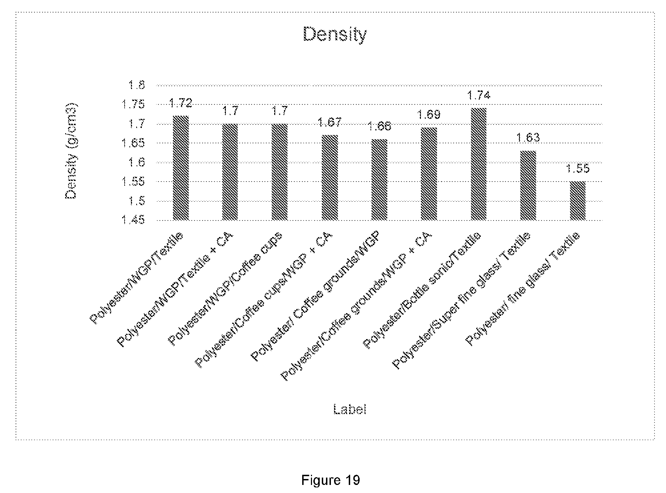

Density of the samples was measured as described above. The results are shown in Figure 19. From Figure 19, on average, the density of the glass/polyester resin panel with textile addition is around 1.70 g/cm$^3$.. The combination of low density, and high flexural strength is expected to facilitate production of thinner countertop/tabletop slabs with longer span.

*Water absorption test*

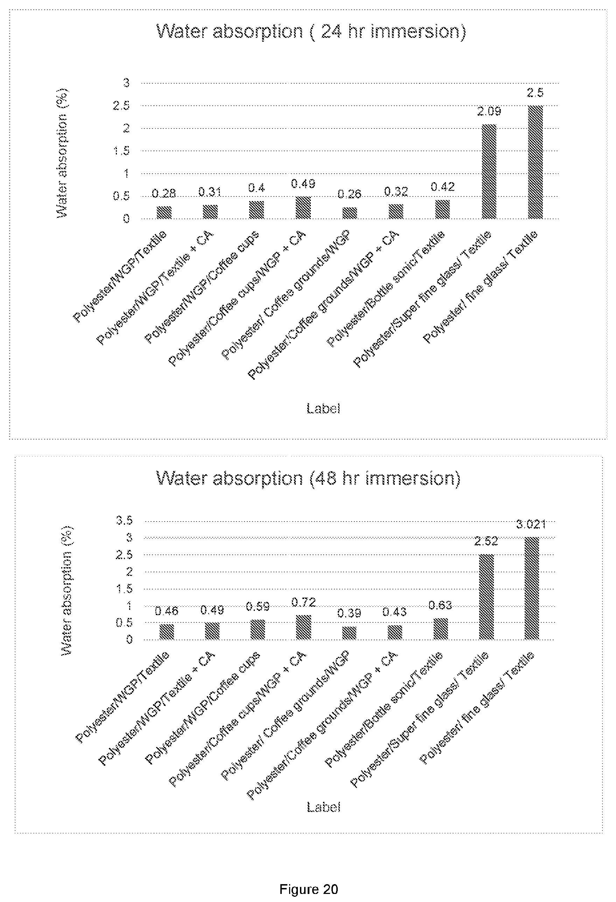

A water absorption test was performed as described above. The results are shown in Figure 20. From Figure 20 it is observed that most of the composite panels made from fine waste glass powder (particle size 75-150 $\mu$m) have water absorption of less than 1%, even after 48 hours immersion. For panels made from super fine and fine glass aggregate with particle sizes of 0.15 - 0.71 mm and 0.5 - 1.0 mm, the water absorption is inferior, at around 2 - 2.5% after 24 hours, and 2.32 - 2.5 after 48 hours. This is due to a higher amount of porosity and the less compact characteristics of the panels. The composites are shown to perform better, or equal to marble slabs which have water absorption of 2-4%. However, application of a clear polyurethane coating is recommended when used in a wet environment in order to ensure excellent water-resistance and a smooth surface finish.

*Silicosis*

In recent years, there has been a growing concern over the health impact of silica dust exposure. Silica is contained in many construction products and exposure can result in severe medical conditions, including lung cancer and silicosis. Silicosis is a lung disease caused by inhalation of fine crystalline silica dust, which comes from cutting, drilling and sanding granites and quartz-based natural or engineered stones. The crystalline silica particles are found to promote the development of pulmonary fibrosis that over prolonged periods increases the risk of lung cancer. Crystalline silica is also classified by IARC (The International Agency for Research on Cancer) as a human carcinogen (World Health Organization, 1997).

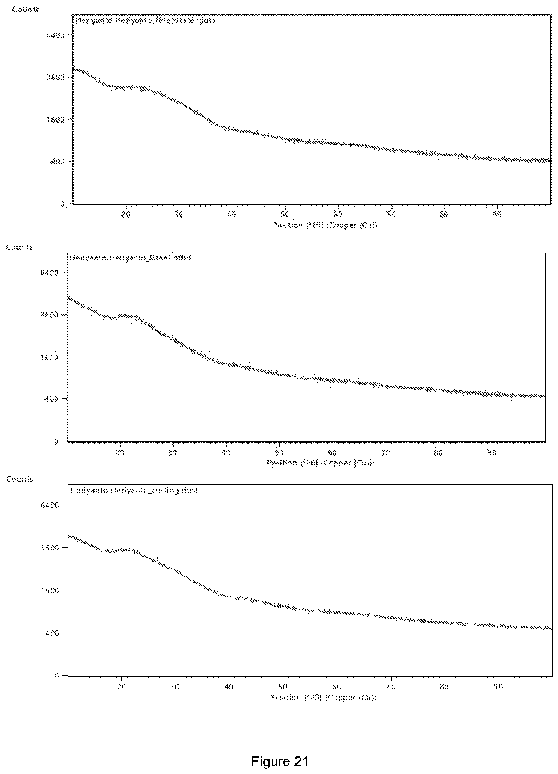

In the present composites, fine silica powder is used as the main ingredient to impart strength and hardness. The silica powder originates from glass. Glass consists of a non-crystalline/amorphous silica that is not classified by the World Health Organisation as carcinogenic to humans and does not cause lung damage. X-Ray diffraction analysis of the glass powder, as well as powder obtained from crushing the composite panels and cutting residue were conducted. As shown in Figure 21, no crystalline peaks were obtained. The result proves that the composite panels of the present invention are a safe alternative product when compared to quartz-based natural and engineered stone.

Based on the above results, the following advantages were observed for composites including textiles:

- The fibrous textile filler helps to prevent warpage of the composites.

- The introduction of textiles helps to lower the exotherm temperature during curing. The temperature was observed to increase from 18 to 21 °C. For comparison, glass/polyester resin panels without a secondary filler show an increase of around 20 °C, from 18 to 40 °C at 0.1% inhibitor and 1 % catalyst.

**Claims**

1. A composite product comprising glass, a binder and at least one filler selected from: textile and coffee grounds, the glass is present in an amount between about 50% and about 90% by weight, wherein the binder is a polymer, **characterized in that** the polymer is a thermoset polymer or a thermoplastic polymer selected from the group consisting of: acrylonitrile butadiene styrene, polylactic acid, styrene acrylonitrile, polypropylene, polyethylene, high density polyethylene, low density polyethylene, linear low density polyethylene, ultra high molecular weight polyethylene, polyvinyl chloride, polyethylene terephthalate, nylon, polystyrene, high impact polystyrene, polyoxymethylene (acetal), poly(methyl methacrylate), polyester and polycarbonate.

2. The composite product of claim 1, wherein the binder is present in an amount between about 5% and about 45% by weight, preferably in an amount between about 15% and about 40% by weight.

3. The composite product of claim 1 or claim 2, wherein the glass is present in an amount between about 50% and about 75% by weight.

4. The composite product of any one of claims 1 to 3, wherein the at least one filler is present in an amount between about 1 % and about 30% by weight, preferably in an amount between about 2.5% and about 15% by weight.

5. The composite product of any one of claims 1 to 4, wherein the glass has a particle size less than or equal to about 5 mm, preferably between about 1 micron and about 5 mm.

6. The composite product of any one of claims 1 to 5, wherein the glass is waste glass.

7. The composite product of any one of claims 1 to 6, wherein the thermoset polymer is, or is obtained from, epoxy resin, polyester resin or vinyl ester resin.

8. The composite product of any one of claims 1 to 7, wherein the textile is clothing, linen, bedding, blankets or curtains.

9. The composite product of any one of claims 1 to 8, which comprises greater than about 60% of waste material.

10. The composite product of any one of claims 1 to 9, further comprising a coating.

11. The composite product of any one of claims 1 to 10, which is in the form of a panel or a tile.

12. A method for preparing a composite product, comprising:

   (i) forming a mixture comprising glass, a binder and at least one filler selected from: textile and coffee grounds; and
   (ii) applying heat and pressure to the mixture to form the composite product,

the glass is present in an amount between about 50% and about 90% by weight, wherein the binder is a polymer, **characterized in that** the polymer is a thermoset polymer or a thermoplastic polymer selected from the group consisting of: acrylonitrile butadiene styrene, polylactic acid, styrene acrylonitrile, polypropylene, polyethylene, high density polyethylene, low density polyethylene, linear low density polyethylene, ultra high molecular weight polyethylene, polyvinyl chloride, polyethylene terephthalate, nylon, polystyrene, high impact polystyrene, polyoxymethylene (acetal), poly(methyl methacrylate), polyester and polycarbonate.

13. A method for preparing a composite product, comprising:

    (i) forming a mixture comprising glass, a binder and at least one filler selected from: textile and coffee grounds;
    (ii) loading the mixture into a mould; and
    (iii) applying a vacuum to the mixture,

the glass is present in an amount between about 50% and about 90% by weight, wherein the binder is a polymer, **characterized in that** the polymer is a thermoset polymer or a thermoplastic polymer selected from the group consisting of: acrylonitrile butadiene styrene, polylactic acid, styrene acrylonitrile, polypropylene, polyethylene, high density polyethylene, low density polyethylene, linear low density polyethylene, ultra high molecular weight polyethylene, polyvinyl chloride, polyethylene terephthalate, nylon, polystyrene, high impact polystyrene, polyoxymethylene (acetal), poly(methyl methacrylate), polyester and polycarbonate.

14. The method of claim 12 or claim 13, wherein the glass is present in an amount between about 50% and about 75% by weight.

**Patentansprüche**

1. Verbundprodukt, umfassend Glas, ein Bindemittel und mindestens einen Füllstoff, ausgewählt aus: einem Textil und Kaffeesatz, wobei das Glas in einer Menge zwischen etwa 50 und etwa 90 Gew.-% vorliegt, wobei das Bindemittel ein Polymer ist, **dadurch gekennzeichnet, dass** das Polymer ein duroplastisches Polymer oder ein thermoplastisches Polymer ist, ausgewählt aus der Gruppe bestehend aus: Acrylnitril-Butadien-Styrol, Polylactid, Styrol-Acrylnitril, Polypropylen, Polyethylen, High-Density-Polyethylen (HDPE), Low-Density-Polyethylen (LDPE), lineares Linear Low-Density-Polyethylen (LLDPE), Ultra-High-Molecular-Weight-Polyethylen (PE-UHMW), Polyvinylchlorid, Polyethylenterephthalat, Nylon, Polystyrol, High Impact Polystyrene (HIPS), Polyoxymethylen (Acetal), Polymethylmethacrylat, Polyester und Polycarbonat.

2. Verbundprodukt nach Anspruch 1, wobei das Bindemittel in einer Menge zwischen etwa 5 und etwa 45 Gew.-%, vorzugsweise in einer Menge zwischen etwa 15 und etwa 40 Gew.-%, vorliegt.

3. Verbundprodukt nach Anspruch 1 oder Anspruch 2, wobei das Glas in einer Menge zwischen etwa 50 Gew.-% und etwa 75 Gew.-% vorliegt.

4. Verbundprodukt nach einem der Ansprüche 1 bis 3, wobei der mindestens eine Füllstoff in einer Menge zwischen etwa 1 Gew.-% und etwa 30 Gew.-%, vorzugsweise in einer Menge zwischen etwa 2,5 Gew.-% und etwa 15 Gew.-%, vorliegt.

5. Verbundprodukt nach einem der Ansprüche 1 bis 4, wobei das Glas eine Partikelgröße von weniger als oder gleich etwa 5 mm, vorzugsweise zwischen etwa 1 Mikrometer und etwa 5 mm, aufweist.

6. Verbundprodukt nach einem der Ansprüche 1 bis 5, wobei das Glas Altglas ist.

7. Verbundprodukt nach einem der Ansprüche 1 bis 6, wobei das duroplastische Polymer Epoxidharz, Polyesterharz oder Vinylesterharz ist oder daraus gewonnen wird.

8. Verbundprodukt nach einem der Ansprüche 1 bis 7, wobei das Textil Kleidung, Wäsche, Bettwäsche, Decken oder Vorhänge ist.

9. Verbundprodukt nach einem der Ansprüche 1 bis 8, das mehr als etwa 60 % Abfallmaterial umfasst.

10. Verbundprodukt nach einem der Ansprüche 1 bis 9, das ferner eine Beschichtung umfasst.

11. Verbundprodukt nach einem der Ansprüche 1 bis 10, das in Form eines Panels oder einer Fliese vorliegt.

12. Verfahren zur Herstellung eines Verbundprodukts, umfassend:

   (i) Bilden einer Mischung, die Glas, ein Bindemittel und mindestens einen Füllstoff umfasst, ausgewählt aus: einem Textil und Kaffeesatz; und
   (ii) Anwenden von Wärme und Druck auf die Mischung, um das Verbundprodukt zu bilden,

   wobei das Glas in einer Menge zwischen etwa 50 und etwa 90 Gew.-% vorliegt, wobei das Bindemittel ein Polymer ist, **dadurch gekennzeichnet, dass** das Polymer ein duroplastisches Polymer oder ein thermoplastisches Polymer ist, ausgewählt aus der Gruppe bestehend aus: Acrylnitril-Butadien-Styrol, Polylactid, Styrol-Acrylnitril, Polypropylen, Polyethylen, High-Density-Polyethylen (HDPE), Low-Density-Polyethylen (LDPE), lineares Linear Low-Density-Polyethylen (LLDPE), Ultra-High-Molecular-Weight-Polyethylen (PE-UHMW), Polyvinylchlorid, Polyethylenterephthalat, Nylon, Polystyrol, High Impact Polystyrene (HIPS), Polyoxymethylen (Acetal), Polymethylmethacrylat, Polyester und Polycarbonat.

13. Verfahren zur Herstellung eines Verbundprodukts, umfassend:

   (i) Bilden einer Mischung, die Glas, ein Bindemittel und mindestens einen Füllstoff umfasst, ausgewählt aus: einem Textil und Kaffeesatz;
   (ii) Einfüllen der Mischung in eine Form; und
   (iii) Anwenden eines Vakuums auf die Mischung,

   wobei das Glas in einer Menge zwischen etwa 50 und etwa 90 Gew.-% vorliegt, wobei das Bindemittel ein Polymer ist, **dadurch gekennzeichnet, dass** das Polymer ein duroplastisches Polymer oder ein thermoplastisches Polymer ist, ausgewählt aus der Gruppe bestehend aus: Acrylnitril-Butadien-Styrol, Polylactid, Styrol-Acrylnitril, Polypropylen, Polyethylen, High-Density-Polyethylen (HDPE), Low-Density-Polyethylen (LDPE), lineares Linear Low-Density-Polyethylen (LLDPE), Ultra-High-Molecular-Weight-Polyethylen (PE-UHMW), Polyvinylchlorid, Polyethylenterephthalat, Nylon, Polystyrol, High Impact Polystyrene (HIPS), Polyoxymethylen (Acetal), Polymethylmethacrylat, Polyester und Polycarbonat.

14. Verfahren nach Anspruch 12 oder Anspruch 13, wobei das Glas in einer Menge zwischen etwa 50 Gew.-% und etwa 75 Gew.-% vorliegt.

## Revendications

1. Produit composite comprenant du verre, un liant et au moins une charge choisie parmi : textile et marc de café, le verre étant présent en une quantité comprise entre environ 50 % et environ 90 % en poids, dans lequel le liant est un polymère, **caractérisé en ce que** le polymère est un polymère thermodurcissable ou un polymère thermoplastique choisi parmi le groupe constitué de : acrylonitrile butadiène styrène, acide polylactique, styrène-acrylonitrile, polypropylène, polyéthylène, polyéthylène haute densité, polyéthylène basse densité, polyéthylène linéaire basse densité, polyéthylène de masse molaire très élevée, polychlorure de vinyle, téréphtalate de polyéthylène, nylon, polystyrène, polystyrène choc, polyoxyméthylène (acétal), poly(méthacrylate de méthyle), polyester et polycarbonate.

2. Produit composite selon la revendication 1, dans lequel le liant est présent en une quantité comprise entre environ 5 % et environ 45 % en poids, de préférence en une quantité comprise entre environ 15 % et environ 40 % en poids.

3. Produit composite selon la revendication 1 ou la revendication 2, dans lequel le verre est présent en une quantité comprise entre environ 50 % et environ 75 % en poids.

4. Produit composite selon l'une quelconque des revendications 1 à 3, dans lequel ladite au moins une charge est présente en une quantité comprise entre environ 1 % et environ 30 % en poids, de préférence en une quantité comprise entre environ 2,5 % et environ 15 % en poids.

**5.** Produit composite selon l'une quelconque des revendications 1 à 4, dans lequel le verre présente une taille de particule inférieure ou égale à environ 5 mm, de préférence comprise entre environ 1 micron et environ 5 mm.

**6.** Produit composite selon l'une quelconque des revendications 1 à 5, dans lequel le verre est du verre de rebut.

**7.** Produit composite selon l'une quelconque des revendications 1 à 6, dans lequel le polymère thermodurcissable est, ou est obtenu à partir d'une résine époxy, d'une résine polyester ou d'une résine vinylester.

**8.** Produit composite selon l'une quelconque des revendications 1 à 7, dans lequel le textile est un vêtement, du linge de maison, de la literie, des couvertures ou des rideaux.

**9.** Produit composite selon l'une quelconque des revendications 1 à 8, qui comprend une proportion supérieure à environ 60 % de matériau de rebut.

**10.** Produit composite selon l'une quelconque des revendications 1 à 9, comprenant en outre un revêtement.

**11.** Produit composite selon l'une quelconque des revendications 1 à 10, se présentant sous la forme d'un panneau ou d'un carreau.

**12.** Procédé de préparation d'un produit composite, comprenant :

(i) la formation d'un mélange comprenant du verre, un liant et au moins une charge choisie parmi : textile et marc de café ; et
(ii) l'application de chaleur et de pression au mélange pour former le produit composite,

le verre étant présent en une quantité comprise entre environ 50 % et environ 90 % en poids, dans lequel le liant est un polymère, **caractérisé en ce que** le polymère est un polymère thermodurcissable ou un polymère thermoplastique choisi parmi le groupe constitué de : acrylonitrile butadiène styrène, acide polylactique, styrène-acrylonitrile, polypropylène, polyéthylène, polyéthylène haute densité, polyéthylène basse densité, polyéthylène linéaire basse densité, polyéthylène de masse molaire très élevée, polychlorure de vinyle, téréphtalate de polyéthylène, nylon, polystyrène, polystyrène choc, polyoxyméthylène (acétal), poly(méthacrylate de méthyle), polyester et polycarbonate.

**13.** Procédé de préparation d'un produit composite, comprenant :

(i) la formation d'un mélange comprenant du verre, un liant et au moins une charge choisie parmi : textile et marc de café ;
(ii) introduction du mélange dans un moule ; et
(iii) mise sous vide du mélange,

le verre étant présent en une quantité comprise entre environ 50 % et environ 90 % en poids, dans lequel le liant est un polymère, **caractérisé en ce que** le polymère est un polymère thermodurcissable ou un polymère thermoplastique choisi dans le groupe constitué de : acrylonitrile butadiène styrène, acide polylactique, styrène-acrylonitrile, polypropylène, polyéthylène, polyéthylène haute densité, polyéthylène basse densité, polyéthylène linéaire basse densité, polyéthylène de masse molaire très élevée, polychlorure de vinyle, téréphtalate de polyéthylène, nylon, polystyrène, polystyrène choc, polyoxyméthylène (acétal), poly(méthacrylate de méthyle), polyester et polycarbonate.

**14.** Procédé selon la revendication 12 ou la revendication 13, dans lequel le verre est présent en une quantité comprise entre environ 50 % et environ 75 % en poids.

Figure 1

(a)

(b)

(c)

(d)

Figure 2

Figure 3

Figure 4

Figure 5

Sample 1

Sample 2

Sample 3

Figure 6

## Glass granule (minus 5)/textile/polyester resin

## Waste glass powder/ Textile/polyester resin

## Waste glass powder/ Textile/polyester resin/silane

Figure 7

(a)

(b)

(c)

Figure 8

Stopper    Breather

Vacuum bag

Figure 9

Figure 10

Figure 11

Figure 12

Figure 13

Figure 14

Figure 15

Figure 16

Figure 17

Figure 18

Figure 19

Figure 20

Figure 21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- AU 20142015
- CN 108314400
- IT PO20100008
- WO 2015044894 A
- JP 2018083393 B
- US 5375777 A
- WO 2013110128 A

**Non-patent literature cited in the description**

- **ARULRAJAH ARUL et al.** *Recycled glass as supplementary filler material in spent coffee grounds geopolymers*